# EUROPÄISCHE PATENTSCHRIFT

(11) **EP 1 997 700 B1**
(45) Veröffentlichungstag und Bekanntmachung des Hinweises auf die Patenterteilung: **27.07.2011**
(21) Anmeldenummer: 08006900.8
(22) Anmeldetag: 05.04.2008
(51) Int. Cl.: B60T 7/10, B60T 13/68, B60T 15/04

(54) **Betätigungseinrichtung für eine Bremsanlage**
Actuation device for a braking system
Dispositif d'actionnement pour une installation de frein

(30) Priorität: 02.06.2007 DE 102007025814
(43) Veröffentlichungstag der Anmeldung: 03.12.2008
(73) Patentinhaber: WABCO GmbH, 30432 Hannover (DE)
(72) Erfinder: Bensch, Uwe, 30161 Hannover (DE); Förster, Henning, 31171 Nordstemmen (DE); Pfeiffer, Dirk, 30827 Garbsen (DE); Rosendahl, Hartmut, 30167 Hannover (DE); Strache, Wolfgang, 30966 Hemmingen (DE); Struwe, Otmar, 30163 Hannover (DE)

(56) Entgegenhaltungen:
- WO-A1-2005/009816
- DE-U- 20 217 807
- GB-A- 2 429 756

## Beschreibung

Die Erfindung betrifft eine Betätigungseinrichtung für eine Bremsanlage eines Fahrzeugs, insbesondere eines Nutzfahrzeugs, mit einer für den Fahrbetrieb vorgesehenen Betriebsbremse und einer zum Feststellen des Fahrzeugs vorgesehenen Parkbremse, wobei mittels der Parkbremse eine Bremswirkung unabhängig von einer Bremswirkung der Betriebsbremse erzeugbar ist. Diese Betätigungseinrichtung weist ein manuell betätigbares Betätigungselement zur Betätigung der Parkbremse auf, das entlang einer Bewegungsbahn auslenkbar ist. Die Betätigungseinrichtung weist ferner mehrere Schaltzustände auf: In einem ersten Schaltzustand ist die Bremswirkung der Parkbremse von der Auslenkung des Betätigungselements entlang der Bewegungsbahn abhängig. In einem zweiten Schaltzustand ist die volle Bremswirkung der Parkbremse bereitstellbar. Das Betätigungselement ist derart vorgespannt, dass es ohne äußere Einwirkung eine vorbestimmte Neutralstellung einnimmt. Benachbart zu dieser Neutralstellung ist ein von einer sog. ersten Auslenkposition begrenzter sog. erster Auslenkbereich vorgesehen, in dem die Betätigungseinrichtung den ersten Schaltzustand einnehmen kann. Benachbart zu dem ersten Auslenkbereich, jedoch von der Neutralstellung beabstandet, ist ein sog. zweiter Auslenkbereich oder eine sog. zweite Auslenkposition vorgesehen, in dem die Betätigungseinrichtung den zweiten Schaltzustand einnimmt.

Eine derartige Betätigungseinrichtung ist aus DE 103 36 611 A1 bekannt. Mittels dieser Betätigungseinrichtung wird ein elektrischer Signalgeber zur Betätigung einer Parkbremse realisiert. Dabei wird ein manuell verschwenkbarer Betätigungshebel gegen die Kraft einer Feder betätigt. Die Auslenkung des Hebels aus einer Neutralstellung bestimmt die Bremswirkung der Parkbremse. Die Neutralstellung wird mittels einer Federkraft erzeugt, welche den Hebel in die Neutralstellung zurückstellt bzw. in dieser Stellung hält.

Der in DE 103 36 611 A1 detaillierter beschriebene Signalgeber ist jedoch derart ausgebildet, dass der Hebel in einer bestimmten Stellung einrastet. Dabei ist er über die Einraststellung hinaus bis zu einer Endstellung betätigbar. Die Einraststellung wird dabei jedoch als Kriterium für die Aktivierung der Parkbremse mit voller Bremswirkung verwendet. Eine Betätigung über die Einraststellung hinaus wird als Kriterium für die Aktivierung einer Anhängerkontrollfunktion verwendet. Ein Loslassen des Betätigungshebels aus dieser Anhängerkontrollstellung bewirkt infolge der Federkraft ein Zurückstellen des Betätigungshebels in die Einraststellung.

Hoch entwickelte Parkbremseinrichtungen bei Nutzfahrzeugen sehen jedoch elektronische Steuerungsmöglichkeiten der Parkbremse vor. Dies führt dazu, dass Schaltzustände der Parkbremse von der Steuerung der Parkbremse verändert werden können, ohne dass der Fahrer diese Zustandsänderungen unmittelbar veranlasst. Es kann daher zu Hebelstellungen der Betätigungseinrichtung kommen, bei denen der vom Hebel repräsentierte Schaltzustand nicht mit dem tatsächlichen Schaltzustand der Parkbremse übereinstimmt.

Diese zeitweise fehlende Übereinstimmung des tatsächlichen Schaltzustandes und des vom Hebel angezeigten Schaltzustandes führt jedoch zu Unklarheiten und kann daher den Fahrer irritieren und infolge derartiger Irritationen Fehlbetätigungen der Bremsanlage verursachen.

Der Erfindung liegt daher das Problem zugrunde, derartige Unklarheiten in Bezug auf von einer Betätigungseinrichtung angezeigte Schaltzustände einer Parkbremse zu verhindern oder zu vermindern.

Die Erfindung löst dieses Problem mit einer Betätigungseinrichtung der eingangs genannten Art, wobei die Betätigungseinrichtung derart ausgebildet ist, dass sie in einem ersten Modus und bei einer Position des Betätigungselements im ersten Auslenkbereich, in der Neutralstellung oder in einem der Neutralstellung benachbarten, jedoch vom ersten Auslenkbereich beabstandeten und von einer sog. dritten Auslenkposition begrenzten sog. dritten Auslenkbereich den zweiten Schaltzustand aufweist und dass sie in einem zweiten Modus und bei einer Position des Betätigungselements im ersten Auslenkbereich, in der Neutralstellung oder in dem dritten Auslenkbereich den ersten Schaltzustand aufweist, wobei der erste Modus in den zweiten Modus umschaltbar ist, indem das Betätigungselement eine erste Umschaltposition einnimmt und der zweite Modus in den ersten Modus unschaltbar ist, indem das Betätigungselement eine zweite Umschaltposition einnimmt.

Dank der erfinderischen Maßnahmen führt ein Loslassen des Betätigungselements immer zu einer Rückstellung des Betätigungselements in seine Neutralposition. Eine Einrastposition mit einer Auslenkung aus der Neutralstellung wird somit vermieden. Dem Fahrer wird somit anhand der Auslenkung des Betätigungselements kein Schaltzustand der Betätigungseinrichtung und damit der Parkbremse angezeigt. Vielmehr gewöhnt sich der Fahrer daran, dass das Betätigungselement grundsätzlich in der Neutralstellung positioniert ist, solange der Fahrer es nicht betätigt.

Die Betätigungseinrichtung nimmt vielmehr auch die Neutralstellung dann ein, wenn die Parkbremse voll eingelegt ist, das heißt ihre volle Bremswirkung bereitstellt. Dieser Schaltzustand, der vorliegend als zweiter Schaltzustand bezeichnet wird, kann daher nicht nur im zweiten Auslenkbereich, sondern auch bei einer Stellung des Betätigungselements in seiner Neutralstellung eingenommen werden.

Gleichwohl kann im ersten Auslenkbereich ein graduelles Einbremsen des Fahrzeuges über eine Betätigung des Betätigungselements erfolgen, wenn sich die Betätigungseinrichtung im sog. zweiten Modus befindet. Befindet sie sich hingegen im ersten Modus, ist die Parkbremse auch in diesem ersten Auslenkbereich voll eingelegt.

Ferner erlaubt die erfindungsgemäße Betätigungseinrichtung auch ein dosiertes Lösen der Parkbremse, indem die Betätigungseinrichtung zunächst in den zweiten Modus geschaltet wird und dann das Betätigungselement im ersten Auslenkbereich oder einem dem ersten Auslenkbereich in Bezug auf die Neutralstellung gegenüberliegenden dritten Auslenkbereich in Richtung der Neutralstellung zurückgeführt wird. Eine Umschaltung zwischen diesen beiden Modi erfolgt dadurch, dass von dem Betätigungselement eine vorbestimmte Umschaltposition, vorzugsweise in einer bestimmten Richtung, überfahren wird.

Die erfindungsgemäße Betätigungseinrichtung zum Betätigen einer Parkbremse unterscheidet sich somit dadurch von bekannten Einrichtungen, dass dem Fahrer des Fahrzeugs von Beginn an verdeutlicht wird, dass der Schaltzustand der Parkbremse nicht von einer Stellung des Betätigungselements angezeigt wird. Vielmehr nimmt das Betätigungselement grundsätzlich selbsttätig seine Neutralstellung ein, wobei mehrere Schaltzustände in dieser Neutralstellung vorliegen können. Der Fahrer wird somit nicht an eine Signalisierung eines Schaltzustandes der Betriebsbremse mittels des Betätigungselements gewöhnt. Er kann daher auch nicht zur Annahme eines falschen Schaltzustandes veranlasst werden.

Weitere vorteilhafte Ausführungsformen der Erfindung ergeben sich aus den Unteransprüchen sowie aus den anhand der beigefügten Zeichnung näher erläuterten Ausführungsbeispielen. In der Zeichnung zeigen:
- Fig. 1 bis 7: Zeitverläufe einer Auslenkung eines Betätigungselements gemäß unterschiedlichen Ausführungsbeispielen;
- Fig. 8: ein Betätigungselement in Form eines Hebels gemäß einem Ausführungsbeispiel der Erfindung;
- Fig. 9 bis 11: eine zur Betätigung des Betätigungselements gemäß Fig. 8 erforderliche Betätigungskraft über die Auslenkung des Betätigungselements;
- Fig. 12: ein Ausführungsbeispiel eines Betätigungselements gemäß Fig. 8 in einer Explosionsansicht mit Mikroschaltern und einem Hall-Sensor-Element;
- Fig. 13: ein weiteres Ausführungsbeispiel eines Hebelbetätigungselements gemäß Fig. 8 in einer Teilansicht mit einem Potentiometer;
- Fig. 14 bis 18: Ausführungsbeispiele von erfindungsgemäßen Betätigungseinrichtungen mit dosierbaren Drehschaltern;
- Fig. 19 bis 24: Ausführungsbeispiele von erfindungsgemäßen Betätigungseinrichtungen mit dosierbaren Tastern.

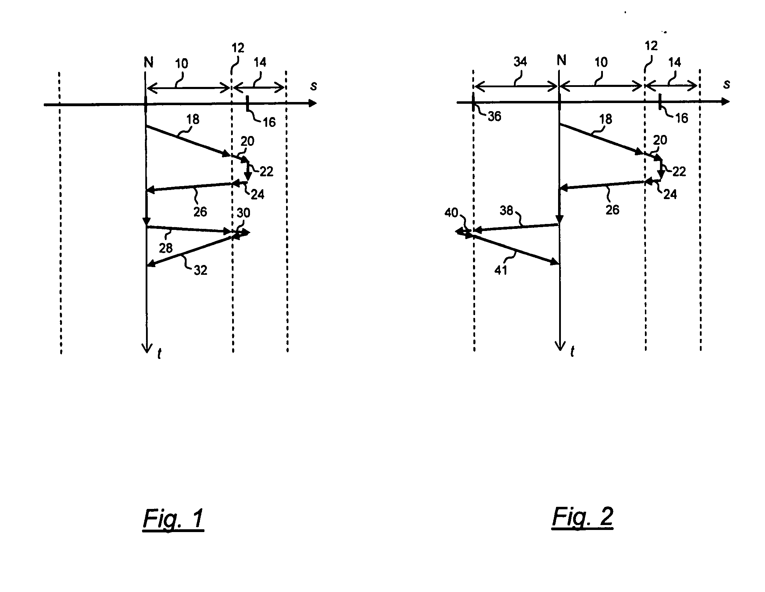

Die Fig. 1 bis 7 veranschaulichen mögliche Verläufe einer Auslenkung s eines Betätigungselements für verschiedene Ausführungsbeispiele erfindungsgemäßer Betätigungseinrichtungen in Anhängigkeit der Zeit t. Die Auslenkung s ist bspw. ein Auslenkweg oder ein Auslenkwinkel - je nach Ausführungsart des Betätigungselements. Das Betätigungselement ist aus der Neutralstellung N entlang einer Bewegungsbahn auslenkbar. Ohne äußere Einwirkung stellt sich das Betätigungselement selbstständig entlang der Bewegungsbahn in die Neutralstellung zurück. Unter dem Begriff "Bewegungsbahn" ist dabei nicht nur eine zurückzulegende Wegstrecke zu verstehen, sondern auch ein zurückzulegender Drehwinkel. Im letzteren Fall führt zwar die linienförmig gedachte Drehachse des Betätigungselements nicht unmittelbar selbst eine Bewegung entlang einer Bewegungsbahn aus. Jedoch bewegt sich zumindest ein Teil des Betätigungselements entlang einer Bewegungsbahn, insbesondere einer kreisförmigen Bewegungsbahn. Sofern daher im Zusammenhang mit der vorliegenden Erfindung von einer Bewegung des Betätigungselements entlang einer Bewegungsbahn die Rede ist, schließt dies auch eine Bewegungsbahn von Teilen bzw. Abschnitten des Betätigungselements ein.

Mittels der Betätigungseinrichtung wird eine Bremsanlage eines Fahrzeugs, insbesondere Nutzfahrzeuges, wie bspw. eines Lastkraftwagens oder eines Busses gesteuert. Dabei ist vorteilhafterweise an das Fahrzeug ein Anhängefahrzeug ankoppelbar, so dass das Fahrzeug als Zugfahrzeug dient.

Bei derartigen Fahrzeugen ist regelmäßig neben der für den Fahrbetrieb vorgesehenen Betriebsbremse auch eine zum Abstellen und Feststellen des Fahrzeugs vorgesehene Parkbremse bereitgestellt. Dabei wirken regelmäßig sowohl die Betriebsbremse als auch die Parkbremse auf gleiche Bauteile im Antriebsstrang, d.h. bspw. auf dieselben Radbremsen oder die gleiche Antriebswelle. Jedoch verfügen die Betriebsbremse und die Parkbremse über unterschiedliche Komponenten.

Vorteilhafterweise verfügt die Parkbremse über sog. Federspeicherbremszylinder, welche im drucklosen Zustand, d.h. im Falle eines pneumatischen Bremssystems im entlüfteten Zustand, die Parkbremse einlegen. Zum Lösen der Parkbremse muss dann der Federspeicherbremszylinder mit Druck bzw. mit Druckluft beaufschlagt, d.h. belüftet werden. Ein Lösen der Parkbremse setzt daher einen verfügbaren Druckmittelvorrat voraus. Sofern jedoch das Fahrzeug abgestellt wird, ist kein Druckmittelvorrat erforderlich, um die Parkbremse eingelegt zu halten. Die erforderliche Bremskraft wird von einer bzw. mehreren Speicherfedern der Federspeicherbremszylinder zur Verfügung gestellt.

Die Betätigungseinrichtung weist mehrere Schaltzustände für die Parkbremse auf. In einem ersten Schaltzustand ist die Bremswirkung der Parkbremse von der Auslenkung s des Betätigungselements entlang der Bewegungsbahn abhängig. Dieser Schaltzustand kann insbesondere in einem ersten Auslenkbereich 10 eingenommen werden. Dieser erste Auslenkbereich 10 erstreckt sich von der Neutralstellung N bis zu einer ersten Auslenkposition 12.

Neben dem ersten Auslenkbereich 10 ist ein zweiter Auslenkbereich 14 angeordnet und zwar auf der der Neutralposition N gegenüberliegenden Seite des ersten Auslenkbereichs 10. Dieser zweite Auslenkbereich 14 kann jedoch von einer minimalen Ausdehnung sein, so dass dann nur noch von einer zweiten Auslenkposition 16 gesprochen werden kann. Von einer zweiten Auslenkposition 16 wird jedoch auch dann gesprochen, wenn statt eines zweiten Auslenkbereichs 14 lediglich ein Anschlag entlang der Bewegungsbahn vorgesehen ist, bis zu dem das Betätigungselement ausgelenkt werden kann. Als zweite Auslenkposition 16 dient jedoch bei einem Ausführungsbeispiel eine vorbestimmte Position 16, die sich im Bereich benachbart zur ersten Auslenkposition 12 befindet. Wenn das Betätigungselement den zweiten Auslenkbereich 14 oder die zweite Auslenkposition 16 erreicht, nimmt die Betätigungseinrichtung den zweiten Schaltzustand ein.

Die Betätigungseinrichtung weist zwei Modi auf. Die Betätigungseinrichtung gelangt in den ersten Modus, wenn das Betätigungselement eine erste Umschaltposition und zwar vorzugsweise in einer vorbestimmten Richtung, insbesondere in Richtung der Neutralstellung überschreitet. Diese erste Umschaltposition liegt entweder auf der ersten Auslenkposition 12 oder innerhalb des ersten Auslenkbereichs. In diesem ersten Modus befindet sich die Betätigungseinrichtung im zweiten Schaltzustand, d.h. die Parkbremse stellt ihre volle Bremswirkung bereit, auch wenn sich das Betätigungselement im ersten Auslenkbereich oder in der Neutralstellung befindet. D.h. die Parkbremse liefert unabhängig von der Auslenkung s des Betätigungselements, insbesondere auch dann, wenn sich das Betätigungselement im ersten Auslenkbereich 10 oder in der Neutralstellung N befindet, die volle Bremswirkung der Parkbremse. Dieser Modus kann jedoch wieder geändert werden, indem das Betätigungselement eine zweite Umschaltposition überschreitet und zwar vorzugsweise in einer vorbestimmten Richtung, insbesondere in Richtung der Neutralstellung. Bei einem Ausführungsbeispiel stimmt diese zweite Umschaltposition mit der ersten Umschaltposition überein. Diese zweite Umschaltposition kann jedoch unabhängig von der ersten Umschaltposition gewählt sein. Sie kann insbesondere wiederum im ersten Auslenkbereich 10 liegen oder mit der ersten Auslenkposition 12 zusammenfallen. In dem auf diese Weise erreichten zweiten Modus weist die Betätigungseinrichtung den ersten Schaltzustand auf, in dem die Parkbremse eine Bremswirkung in Abhängigkeit der Auslenkung des Betätigungselements innerhalb des ersten Auslenkbereichs 10 entfaltet. Die Parkbremse kann somit dosiert gelöst werden.

Fig. 1 zeigt beispielhaft einen Verlauf der Auslenkung über die Zeit t, wobei zunächst die Parkbremse dosiert eingelegt wird. Dieses Einlegen erfolgt während einer Bewegung 18 des Betätigungselements von der Neutralstellung N zur ersten Auslenkposition 12 entlang des ersten Auslenkbereichs 10. Der Bediener des Betätigungselements bewegt das Betätigungselement über diese erste Auslenkposition 12 hinweg bis in die zweite Auslenkposition 16, wobei diese Bewegung mit der Bezugsziffer 20 bezeichnet ist. Im Bereich der Bewegung 20 entfaltet die Parkbremse ihre volle Bremswirkung. D.h. die Betätigungseinrichtung befindet sich im zweiten Schaltzustand.

Der Fahrer hat nun durch die Bewegung 18 und die Bewegung 20 die Parkbremse voll eingelegt. Er verharrt nun für eine bestimmte Verweildauer 22 in der erreichten Auslenkung und lässt dann das Betätigungselement los bzw. führt es zurück in die Neutralstellung N. Das Betätigungselement erreicht somit ausgehend von der zweiten Auslenkposition 16 in einem ersten Bewegungsabschnitt 24 die erste Auslenkposition 12 und in einem zweiten Bewegungsabschnitt 26 durch den ersten Auslenkbereich 10 hindurch die Neutralstellung N.

Bei Überschreiten der ersten Auslenkposition 12, d.h. beim Übergang von der Bewegung 24 in die Bewegung 26 bzw. bei Erreichen einer sog. zweiten Umschaltposition erfolgt eine Modusumschaltung in den ersten Modus, was dazu führt, dass die Betätigungseinrichtung den zweiten Schaltzustand aufweist, d.h. die volle Bremswirkung der Parkbremse bereitstellt, unabhängig davon, ob sich das Betätigungselement im ersten Auslenkbereich 10 oder in der Neutralstellung N befindet, d.h. in einem Bereich, in dem Bremswirkung sonst - also im sog. zweiten Modus - von der Auslenkung des Betätigungselements abhängig ist. Im zweiten Auslenkbereich 14 wird ohnehin immer die volle Bremswirkung der Parkbremse bereitgestellt, d.h. die Betätigungseinrichtung befindet sich dann immer im zweiten Schaltzustand.

Die Parkbremse bleibt daher nun auch im ersten Auslenkbereich 10 eingelegt und zwar bis auf weiteres. Die Parkbremse kann gelöst werden, indem das Betätigungselement erneut zunächst in Richtung des zweiten Auslenkbereichs und dann wieder in Richtung der Neutralstellung bewegt wird. Dieser Vorgang ist mit den Bewegungen 28, 30, 32 gekennzeichnet. Durch Erreichen einer zweiten Umschaltposition und zwar vorzugsweise in einer vorbestimmten Richtung, insbesondere in Richtung der Neutralstellung erfolgt eine Umschaltung vom ersten Modus in den zweiten Modus. Diese zweite Umschaltposition fällt vorteilhafterweise mit der ersten Auslenkposition 12 zusammen. Bei einer alternativen Ausführungsform liegt die zweite Umschaltposition jedoch im ersten Auslenkbereich 10. Der Fahrer vollzieht somit eine Umschaltung vom ersten Modus in den zweiten Modus, indem er bspw. das Betätigungselement über die erste Auslenkposition 12 hinweg bewegt, so wie dies durch die Bewegungsabschnitte 30 und 32 dargestellt ist.

Der Fahrer kann nun die Parkbremse graduell lösen, indem er das Betätigungselement dosiert durch den ersten Auslenkbereich 10 bis in die Neutralstellung N zurückführt. Dies ist in Fig. 1 mit der Bezugsziffer 32 veranschaulicht.

Ein alternatives Ausführungsbeispiel ist in Fig. 2 gezeigt. Das Einlegen der Parkbremse sowie die Umschaltung in den ersten Modus entspricht dabei dem in Fig. 1 gezeigten Ausführungsbeispiel, auf das insofern Bezug genommen wird. Daher entsprechen die Bezugsziffern 10 bis 26 den in Fig. 1 gezeigten Bezugsziffern.

Die Umschaltung vom ersten Modus in den zweiten Modus und das Lösen der Parkbremse erfolgt jedoch in dem in Fig. 2 gezeigten Ausführungsbeispiel in anderer Weise. Das Betätigungselement wird gemäß Fig. 2 nämlich zum Lösen der Parkbremse in einen sog. dritten Auslenkbereich 34 bewegt, der sich ebenfalls an die Neutralstellung N anschließt, jedoch im Hinblick auf diese Neutralstellung N auf der dem ersten Auslenkbereich 10 gegenüberliegenden Seite befindet. Der dritte Auslenkbereich ist somit einerseits durch die Neutralstellung N und andererseits durch eine dritte Auslenkposition 36 begrenzt.

Es sei nun wiederum angenommen, dass die Parkbremse dosiert durch eine Bewegung des Betätigungselements 18 eingelegt worden ist. Durch eine weitere Bewegung 24 bzw. 26 wurde der erste Modus eingeschaltet. Die Parkbremse liefert daher ihre volle Bremswirkung gemäß dem zweiten Schaltzustand. Ein Zurückführen des Betätigungselements gemäß der Bewegung 26 lässt daher die Parkbremse voll eingelegt.

Das Lösen der Parkbremse erfolgt nun durch eine Betätigung des Betätigungselements in einer dem Einlegen der Parkbremse entgegen gerichteten Bewegungsrichtung. Das Betätigungselement wird zu diesem Zweck gemäß Bezugsziffer 38 über den dritten Auslenkbereich 34 zur dritten Auslenkposition 36 und ggf. über diese hinweg bewegt 40. Nach der Bewegung 40 in die dritte Auslenkposition 36 bzw. über die dritte Auslenkposition 36 hinweg erfolgt eine Bewegung 41 in Richtung der Neutralstellung N, wobei während der Bewegung 41 ein dosiertes Lösen der Parkbremse erfolgt. Beim Übergang von der Bewegung 40 in die Bewegung 41 bzw. während der Bewegung 41 erfolgt eine Umschaltung vom ersten Modus in den zweiten Modus. Diese Umschaltung erfolgt, wenn das Betätigungselement eine zweite Umschaltposition erreicht, die entweder im dritten Auslenkbereich 34 liegt oder mit der dritten Auslenkposition 36 zusammenfällt. Durch diese Umschaltung wird der zweite Schaltzustand der Parkbremse, bei dem die volle Bremswirkung bereitgestellt wird, aufgehoben und die von der Parkbremse bereitgestellte Bremswirkung ist wieder abhängig von der Auslenkung des Betätigungselements und zwar nicht nur entlang des ersten Auslenkbereichs 10, sondern auch entlang des dritten Auslenkbereichs 34. Ein Zurückführen des Betätigungselements von der dritten Auslenkposition 36 in Richtung der Neutralstellung N entlang des dritten Auslenkbereichs 34 ermöglicht somit ein dosiertes Lösen der Parkbremse.

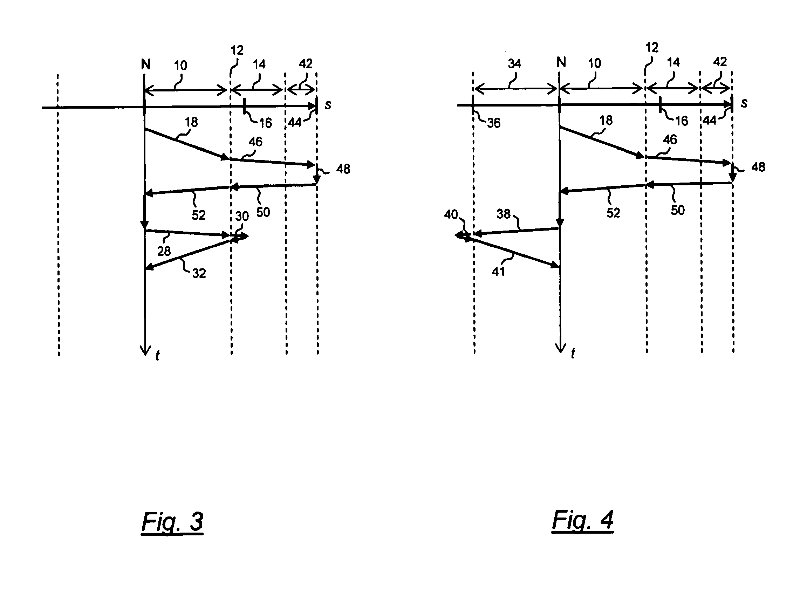

Fig. 3 und 4 zeigen jeweils einen Zeitverlauf einer Auslenkung eines Betätigungselements einer Betätigungseinrichtung mit einer Anhängerkontrollstellung zum Aktivieren einer Anhänger-Kontrollfunktion. Bei aktivierter Anhängerkontrollfunktion wird ein aus einem Zugfahrzeug und einem Anhängefahrzeug bestehender Fahrzeugzug lediglich von den Bremsen des Zugfahrzeuges gehalten. Dies erlaubt eine Überprüfung dahingehend, ob bei einem Nachlassen der Bremswirkung des Anhängefahrzeuges der Fahrzeugzug festgestellt gehalten werden kann. Wenn sich das Betätigungselement in der Anhängerkontrolistellung befindet, bewirkt eine elektronische Steuerung der Bremsanlage, insbesondere der Parkbremse bei stehendem Fahrzeug oder bereits aktivierter Parkbremse eine Betätigung eines Anhängerkontrollventils, wodurch ein pneumatischer Steueranschluss eines Anhängersteuerventils mit einem Vorratsdruck beaufschlagt wird. Aufgrund einer invertierenden Wirkungsweise des Anhängersteuerventils werden infolge der Druckbeaufschlagung die Bremsen des Anhängers gelöst. Dieser Zustand hält so lange an, wie die Betätigungseinrichtung in der Anhängerkontrollstellung gehalten wird. Die Parkbremse des dem Anhängefahrzeug zugeordneten Zugfahrzeugs bleibt dabei eingelegt. Sobald die Anhängerkontrollstellung verlassen wird, schaltet die Steuerung das Anhängerkontrollventil wieder in seine ursprüngliche Schaltstellung. Hierdurch wird der Steueranschluss des Anhängersteuerventils entlüftet und die Bremsen des Anhängefahrzeuges in den vor Aktivierung der Anhängerkontrollstellung liegenden Betätigungszustand zurückversetzt. Die Steuerung ignoriert vorteilhafterweise eine eventuelle Betätigung der Betätigungseinrichtung in die Anhängerkontrollstellung bei fahrendem Fahrzeug.

Eine Betätigungseinrichtung gemäß einem besonderen Ausführungsbeispiel der Erfindung weist daher eine Anhängerkontrollstellung auf, bei der bei einer Position des Betätigungselements in einem sog. vierten Auslenkbereich 42 oder einer sog. vierten Auslenkposition 44 die Anhängerkontrollfunktion aktivierbar ist. Dieser vierte Auslenkbereich 42 ist benachbart zum zweiten Auslenkbereich 14 bzw. der zweiten Auslenkposition 16, jedoch vom ersten Auslenkbereich 10 beabstandet angeordnet. Die vierte Auslenkposition 44 ist innerhalb des vierten Auslenkbereichs 42, insbesondere an seinem äußeren, d.h. der Neutralstellung N abgewandten Ende vorgesehen. Vorteilhafterweise bildet die vierte Auslenkposition 44 einen Endanschlag für das Betätigungselement. Von der Neutralstellung aus kommend schließt sich somit vorzugsweise der zweite Auslenkbereich 14 an den ersten Auslenkbereich 10 an, während sich der vierte Auslenkbereich 42 an den zweiten Auslenkbereich 14 anschließt.

Wenn das Betätigungselement die Anhängerkontrolistellung, d.h. den vierten Auslenkbereich 42 bzw. die vierte Auslenkposition 44 erreicht, ist bzw. wird mittels der Betätigungseinrichtung für das Zugfahrzeug der zweite Schaltzustand eingeschaltet, indem die volle Bremswirkung der Parkbremse im Zugfahrzeug bereitgestellt wird, während das am Zugfahrzeug angehängte Anhängefahrzeug sich im ungebremsten Zustand befindet bzw. in diesen ungebremsten Zustand geschaltet wird.

Gemäß Fig. 3 und 4 wird zunächst der Betätigungshebel entlang des ersten Auslenkbereichs 10 bewegt (Bewegung 18). Dabei ist der zweite Modus aktiviert, d.h. die Parkbremswirkung ist abhängig von der Auslenkung. Das Betätigungselement wird nun weiter entlang des zweiten Auslenkbereichs 14 in den vierten Auslenkbereich 42 geführt (Bewegung 46). Bei Erreichen des vierten Auslenkbereichs bzw. der vierten Auslenkposition 44 wird die Anhängerkontrollstellung erreicht und die Anhängerkontrollfunktion aktiviert. Die Anhängerkontrollstellung wird für eine Verweildauer 48 gehalten.

Anschließend wird das Betätigungselement wieder in Richtung der Neutralstellung N geführt, und zwar zunächst gemäß einer Bewegung 50 entlang des vierten Auslenkbereichs 42 und des zweiten Auslenkbereichs 14 und sodann gemäß einer Bewegung 52 entlang des ersten Auslenkbereichs 10. Die Betätigungseinrichtung schaltet dabei in den ersten Modus, so dass die Parkbremse ihre volle Bremswirkung bereitstellt. Zum Lösen der Parkbremse wird das Betätigungselement sodann wieder entweder - wie im Zusammenhang mit Fig. 1 erläutert - durch Bewegung des Betätigungselements in Richtung des zweiten Auslenkbereichs 14 bzw. durch Bewegung des Betätigungselements zurück vom zweiten Auslenkbereich 14 in den ersten Auslenkbereich 10 oder - wie im Zusammenhang mit Fig. 2 erläutert - durch Bewegung des Betätigungselements in den dritten Auslenkbereich 34 bzw. zur dritten Auslenkposition 36 gelöst. In den Fig. 3 und 4 sind daher die entsprechenden Bezugsziffern wie in den Fig. 1 bzw. 2 verwendet, soweit dies gleiche Bewegungsabläufe, Bereiche und Positionen betrifft.

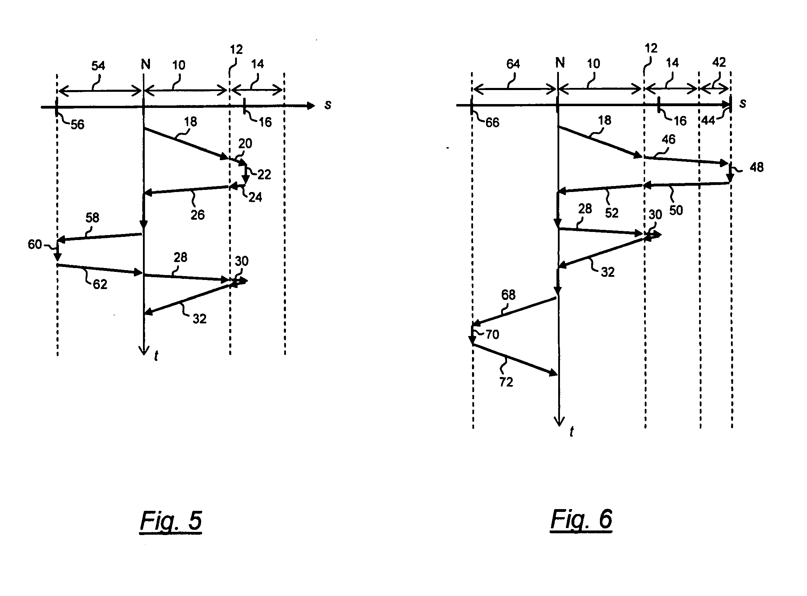

Fig. 5 veranschaulicht den zeitlichen Verlauf eines Betätigungselements einer Betätigungseinrichtung gemäß einem weiteren Ausführungsbeispiel der Erfindung. Die Betätigungseinrichtung weist wiederum eine Anhängerkontrollstellung auf, die jedoch der anhand der Fig. 3 und 4 erläuterten Anhängerkontrollstellung gegenüberliegt. Die Betriebsweise stimmt dabei im Wesentlichen mit der anhand von Fig. 1 erläuterten Betriebsweise überein. Daher bezeichnen gleiche Bezugsziffern gleiche Bewegungsabläufe, Bereiche und Positionen. Insoweit wird auf die Erläuterung zu Fig. 1 Bezug genommen.

Nachdem gemäß den Bewegungen 18, 20, 22, 24, 26 des Betätigungselements entlang des ersten Auslenkbereichs 10 in den zweiten Auslenkbereich 14 bzw. zur zweiten Auslenkposition 16 die Parkbremse eingelegt und durch Rückführen des Betätigungselements vom zweiten Auslenkbereich 14 in den ersten Auslenkbereich 10 der erste Modus zur Aufrechterhaltung der vollen Parkbremswirkung auch im ersten Auslenkbereich und in der Neutralstellung aktiviert worden ist, kann nun eine Anhängerkontrollstellung durch eine Betätigung des Betätigungselements in einer Richtung vom ersten Auslenkbereich 10 weg erreicht werden. Die Anhängerkontrollstellung befindet sich in einem sog. fünften Auslenkbereich 54 bzw. bei einer fünften Auslenkposition 56. Der fünfte Auslenkbereich 54 ist benachbart zur Neutralstellung N, jedoch vom ersten Auslenkbereich 10 beabstandet angeordnet. Die fünfte Auslenkposition 56 ist innerhalb des fünften Auslenkbereichs 54, insbesondere an seinem äußeren, d.h. der Neutralstellung N abgewandten Ende vorgesehen. Vorteilhafterweise bildet die fünfte Auslenkposition 56 einen Endanschlag für das Betätigungselement. In dieser Anhängerkontrollstellung befindet sich die Betätigungseinrichtung im zweiten Schaltzustand für das Zugfahrzeug, d.h. das Zugfahrzeug erhält die volle Parkbremswirkung, während ein an das Zugfahrzeug angehängtes Anhängefahrzeug in einen ungebremsten Zustand geschaltet wird.

In dem in Fig. 5 gezeigten Ausführungsbeispiel wird daher mittels einer Bewegung 58 des Betätigungselements der fünfte Auslenkbereich 54 durchfahren und die fünfte Auslenkposition 56 erreicht. Das Betätigungselement befindet sich nun in der Anhängerkontrollstellung. Die Anhängerkontrollstellung wird bei Erreichen der fünften Auslenkposition 56 oder Verlassen 62 des fünften Auslenkbereichs 54 verlassen und die Anhängerkontrollfunktion deaktiviert. Gemäß Fig. 5 ist die fünfte Auslenkposition am Ende, und zwar an dem der Neutralstellung gegenüberliegenden Ende des fünften Auslenkbereichs 54 dargestellt. Die fünfte Auslenkposition kann jedoch auch an anderer Stelle vorgesehen sein, insbesondere innerhalb des fünften Auslenkbereichs 54.

Das Lösen der Parkbremse erfolgt dann wieder, wie im Zusammenhang mit Fig. 1 erläutert, durch eine Bewegung 28, 30, 32 des Betätigungselements durch den ersten Auslenkbereich 10 über die erste Auslenkposition 12 hinweg in den zweiten Auslenkbereich 14 bzw. zur zweiten Auslenkposition 16 und dann zurück in die Neutralstellung N. Auf die entsprechenden Ausführungen im Zusammenhang mit Fig. 1 wird daher Bezug genommen.

Fig. 6 zeigt den Verlauf eines Betätigungselements eines weiteren Ausführungsbeispiels einer Betätigungseinrichtung, welche neben einer Anhängerkontrollfunktion auch eine Streckbremsfunktion aufweist. Fig. 6 entspricht somit in weiten Teilen dem anhand von Fig. 3 erläuterten Ausführungsbeispiel, so dass auf die obigen Erläuterungen Bezug genommen wird. Deshalb bezeichnen wiederum gleiche Bezugsziffern gleiche Bewegungsabläufe bzw. Bereiche und Positionen.

Die Betätigungseinrichtung weist nunmehr einen sechsten Auslenkbereich 64 auf, der von einer sechsten, insbesondere einen Endanschlag bildenden Auslenkposition 66 und der Neutralstellung N begrenzt wird. Dieser sechste Auslenkbereich 64 ist vom ersten Auslenkbereich 10 beabstandet angeordnet. Bei einer Stellung des Betätigungselements im sechsten Auslenkbereich 64 werden nur die Bremsen eines an ein als Zugfahrzeug dienendes Fahrzeug angehängten Anhängefahrzeugs betätigt. Dabei ist die Bremswirkung dieser Bremsen von der Auslenkung des Betätigungselements aus der Neutralstellung abhängig. Bei einer derartigen Bremsung verbleiben hingegen die Bremsen des Zugfahrzeugs ungebremst. Ein aus Zugfahrzeug und Anhängefahrzeug bestehender Fahrzeugzug wird somit gestreckt. Daher wird eine derartige Bremsfunktion als Streckbremsfunktion bezeichnet. Diese Streckbremsfunktion wird üblicherweise während des Fahrbetriebs betätigt. Die Parkbremse ist daher zuvor zu lösen. Gleichwohl kann eine derartige Streckbremsfunktion auf vorteilhafte Weise in eine Betätigungseinrichtung für die Parkbremse integriert werden. Dies spart Platz im Cockpit bzw. im Fahrerhaus des Fahrzeugs sowie Kosten gegenüber einer etwaigen eigenständigen Betätigungseinrichtung für die Streckbremsfunktion.

Nachdem mittels der Bewegungen 28, 30 und 32 die Parkbremse gelöst worden ist und der Fahrzeugzug bestehend aus Zugfahrzeug und Anhängefahrzeug wieder fährt, betätigt der Fahrer das Betätigungselement von der Neutralstellung N weg in Richtung der sechsten Auslenkposition 66 gemäß der Bewegung 68. Der Fahrer verweilt für eine bestimmte Zeitdauer 70 in der sechsten Auslenkposition, wodurch maximale Streckbremswirkung erzielt wird. Er löst dann die Streckbremse gemäß der Bewegung 72 wieder, indem er das Betätigungselement in Richtung der Neutralstellung N zurückführt. Die Streckbremse ist dabei dosierbar, wobei die Bremswirkung der Streckbremse abhängig von der Auslenkung des Betätigungselements aus der Neutralstellung ist.

Bei einem (nicht dargestellten) alternativen Konzept weist die Betätigungseinrichtung ein weiteres manuell betätigbares sog. Streckbremsbetätigungselement zur Betätigung der Streckbremsfunktion auf. Dieses Streckbremsbetätigungselement ist ebenfalls entlang einer Bewegungsbahn auslenkbar. Dieses Streckbremsbetätigungselement ist ebenfalls, insbesondere federbelastet, vorgespannt, so dass es ohne äußere Einwirkung eine vorbestimmte Neutralstellung einnimmt. Wiederum sind bei einer Betätigung des Streckbremsbetätigungselements nur die Bremsen eines an ein als Zugfahrzeug dienendes Fahrzeug angehängten Anhängefahrzeugs betätigbar, wobei die Bremswirkung dieser Bremsen von der Auslenkung des Betätigungselements aus der Neutralstellung abhängig ist.

Ein derartiges separates Betätigungselement für die Streckbremsfunktion in der Betätigungseinrichtung, die primär für die Parkbremse vorgesehen ist, ist vorteilhaft, da somit lediglich ein Kabel bzw. Kabelstrang von der Betätigungseinrichtung zu der entsprechenden Steuerungseinrichtung zur Steuerung der Bremsanlage verlegt werden muss. Dies spart Aufwand und damit Kosten beim Einbau einer derartigen Bremsanlage.

Bei einem weiteren bevorzugten Ausführungsbeispiel weist die Betätigungseinrichtung einen Umschalter zum Umschalten zwischen einem Parkbremsmodus und einem Streckbremsmodus auf, wobei bei eingeschaltetem Streckbremsmodus das Betätigungselement zur Bereitstellung einer Streckbremsfunktion dient. Wiederum werden dann mittels des Betätigungselements nur die Bremsen eines an ein als Zugfahrzeug dienendes Fahrzeug angehängten Anhängefahrzeugs betätigt, wobei die Bremswirkung dieser Bremsen von der Auslenkung des Betätigungselements aus der Neutralstellung abhängig ist. Im Parkbremsmodus arbeitet die Betätigungseinrichtung jedoch wie vorstehend beschrieben, insbesondere wie vorstehend im Zusammenhang mit Fig. 3 beschrieben.

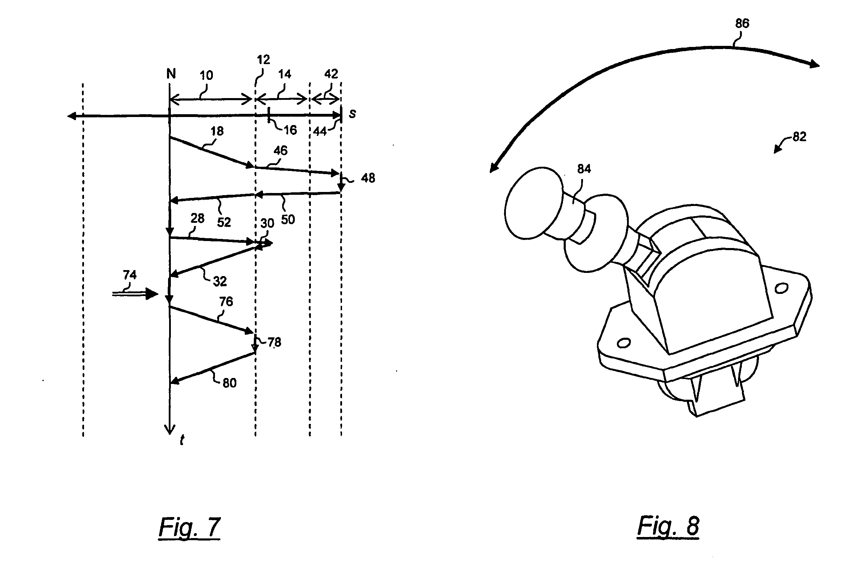

Fig. 7 veranschaulicht den Bewegungsablauf eines Betätigungselements mit einem derartigen Umschalter, wobei die Betätigungseinrichtung zudem eine Anhängerkontrollstellung aufweist, wie im Zusammenhang mit Fig. 3 erläutert. Auf die Ausführungen im Zusammenhang mit Fig. 3 wird daher verwiesen. Nach Einlegen der Parkbremse, Betätigen der Anhängerkontrollstellung und anschließendem Lösen der Parkbremse gemäß den Bewegungen 18, 46, 48, 50, 52, 28, 30, 32 setzt sich der Fahrzeugzug wieder in Bewegung. Zum Zeitpunkt 74 betätigt der Fahrer einen Umschalter an der Betätigungseinrichtung. Der Umschalter versetzt nun die Betätigungseinrichtung in einen Modus, in dem sie eine Streckbremsfunktion zur Verfügung stellt. Dabei bewirkt eine Bewegung 76 des Betätigungselements aus der Neutralstellung eine Betätigung der Anhängerbremsen, während die Bremsen des Zugfahrzeugs nicht betätigt werden. Die Bremswirkung der Anhängerbremsen ist abhängig von der Auslenkung des Betätigungselements aus der Neutralstellung. Nach Halten des Betätigungselements für eine Verweildauer 78 löst der Fahrer die Streckbremse durch Zurückführen des Betätigungselements in Richtung Neutralstellung, was durch eine Bewegung 80 in Fig. 7 veranschaulicht ist. Die Wirkung der Streckbremse ist dabei abhängig von der Auslenkung des Betätigungselements. Vorzugsweise erfolgt die Bewegung des Betätigungselements für die Streckbremsfunktion in gleicher Richtung wie für das Einlegen der Parkbremse, d.h. in Richtung der ersten Auslenkposition 12.

Nach Abschluss einer Betätigung der Streckbremsfunktion schaltet die Betätigungseinrichtung entweder automatisch zurück in den Parkbremsmodus oder der Fahrer schaltet manuell durch Betätigung des Umschalters zurück in den Parkbremsmodus.

In den vorliegend beschriebenen Ausführungsbeispielen ist die Bremswirkung der Parkbremse während des ersten Schaltzustandes entweder proportional zur Auslenkung des Betätigungselements oder degressiv oder progressiv abhängig von dieser Auslenkung. Vorteilhafterweise ist auch die von der Streckbremsfunktion erzeugbare Bremswirkung proportional von der Auslenkung des Betätigungselements bzw. Streckbremsbetätigungselements oder progressiv oder degressiv abhängig von der jeweiligen Auslenkung.

Besonders vorteilhafterweise ist die jeweilige Bremswirkung, d.h. die Bremswirkung der Parkbremse und/oder die Bremswirkung der Streckbremse zusätzlich abhängig von einem Beladungszustandes des Fahrzeugs, insbesondere des Zugfahrzeugs und/oder Anhängefahrzeugs.

Vorteilhafterweise ist ebenfalls vorgesehen, dass eine zur Auslenkung des Betätigungselements und ggf. des Streckbremsbetätigungselements erforderliche Betätigungskraft mit der Auslenkung aus der Neutralstellung N zunimmt.

Ferner ist vorteilhafterweise vorgesehen, dass die zur Auslenkung des Betätigungselements erforderliche Betätigungskraft im ersten Auslenkbereich 10 von der Neutralstellung N bis zur ersten Auslenkposition 12 proportional mit der Auslenkung und zwar mit einer ersten Proportionalitätskonstanten zunimmt. Im zweiten Auslenkbereich 14 nimmt hingegen die erforderliche Betätigungskraft mit einer zweiten Proportionalitätskonstanten zu, wobei die zweite Proportionalitätskonstante größer ist als die erste Proportionalitätskonstante. Dadurch wird dem Fahrer mitgeteilt, dass er sich nunmehr im zweiten Auslenkbereich 14 befindet, in dem er die volle Parkbremswirkung erzeugt.

Bevorzugterweise ist das Betätigungselement mittels Federkraft vorgespannt. Dabei ist im ersten Auslenkbereich eine erste Feder wirksam, welche das Betätigungselement vorspannt, während im zweiten Auslenkbereich nicht nur die erste Feder, sondern eine zusätzliche zweite Feder das Betätigungselement vorspannt. Dabei ist die erste Proportionalitätskonstante eine Federkonstante der ersten Feder. Die zweite Proportionalitätskonstante ergibt sich dann aus der ersten Federkonstanten sowie einer der zweiten Feder zugeordneten zweiten Federkonstanten.

Die Betätigungen des Betätigungselements werden dem Fahrer außerdem über eine haptische, akustische und/oder optische Rückmeldung mitgeteilt. Daher ist die Betätigungseinrichtung derart ausgebildet, dass bei einer Bewegung des Betätigungselements über die erste Auslenkposition 12, die erste innerhalb des ersten Auslenkbereichs 10 liegende Umschaltposition oder die zweite innerhalb des ersten Auslenkbereichs 10 liegende zweite Umschaltposition hinweg - und zwar in einer Bewegungsrichtung, die von der Neutralstellung weggerichtet oder zu ihr hingerichtet ist oder in beiden Bewegungsrichtungen - eine derartige haptische, akustische und/oder optische Rückmeldung erzeugt wird.

Vorteilhafterweise ist die Betätigungseinrichtung derart ausgebildet, dass bei einer Bewegung des Betätigungselements zur bzw. über die dritte Auslenkposition 36 und/oder die innerhalb des dritten Auslenkbereichs 34 liegende zweite Umschaltposition hinweg - und zwar in einer Bewegungsrichtung von der Neutralstellung weg oder zu ihr hin oder in beiden Bewegungsrichtungen - eine haptische, akustische und/oder optische Rückmeldung für den Fahrer erzeugt wird.

Bei einem weiteren vorteilhaften Ausführungsbeispiel ist die Betätigungseinrichtung derart ausgebildet, dass bei einer Bewegung des Betätigungselements über einen Grenzbereich zwischen dem zweiten Auslenkbereich 14 und dem vierten Auslenkbereich 42 hinweg, insbesondere in beiden Bewegungsrichtungen, eine haptische, akustische und/oder optische Rückmeldung für die Bedienperson erzeugt wird.

Bei einem weiteren vorteilhaften Ausführungsbeispiel ist die Bewegungsrichtung derart ausgebildet, dass bei einer Bewegung des Betätigungselements über die fünfte Auslenkposition 46 hinweg, insbesondere in beiden Bewegungsrichtungen, eine haptische, akustische und/oder optische Rückmeldung für die Bedienperson erzeugt wird.

Vorteilhafterweise wird eine entsprechende haptische Rückmeldung mittels einer Änderung der erforderlichen Betätigungskraft zur Änderung der Auslenkung des Betätigungselements erzeugt. Dies kann bspw. durch die Überwindung eines Widerstands erfolgen. Insbesondere kann die Betätigungseinrichtung hierbei einen sog. "Klick" erzeugen, welcher hörbar und/oder spürbar, d.h. akustisch und/oder haptisch wahrnehmbar ist.

Alle diese Rückmeldungen, insbesondere jedoch die haptische Rückmeldung, welche eine Änderung der Betätigungskraft mit sich bringt, behindert jedoch nicht eine Rückstellung des Betätigungselements in die Neutralstellung. Vielmehr bleibt in allen Betätigungsmodi und in allen Ausführungsformen eine Rückstellfunktion des Betätigungselements in die Neutralstellung bei Loslassen des Betätigungselements erhalten.

Bei einem weiteren bevorzugten Ausführungsbeispiel weist die Betätigungseinrichtung einen lösbaren Sperrmechanismus auf, der verhindert, dass das Betätigungselement unbeabsichtigt in die Anhängerkontrollstellung, d.h. in den vierten Auslenkbereich 42 bzw. die vierte Auslenkposition 44 oder in den fünften Auslenkbereich 54 bzw. in die fünfte Auslenkposition 56 ausgelenkt wird. Dieser Sperrmechanismus gestattet jedoch eine Bewegung von dem vierten Auslenkbereich 42 bzw. der vierten Auslenkposition 44 bzw. vom fünften Auslenkbereich 54 bzw. von der fünften Auslenkposition 56 in Richtung der Neutralstellung. Somit ist gewährleistet, dass auch bei Bereitstellung eines derartigen lösbaren Sperrmechanismus die Neutralstellung beim Loslassen des Betätigungselements immer wieder automatisch eingenommen wird.

Der Sperrmechanismus ist vorteilhafterweise mittels Ausübung einer zusätzlichen Kraft auf das Betätigungselement bzw. die Betätigungseinrichtung lösbar, so dass nach Lösen des Sperrmechanismus der vierte Auslenkbereich 42 bzw. die vierte Auslenkposition 44 bzw. der fünfte Auslenkbereich 54 bzw. die fünfte Auslenkposition 56 erreicht werden kann. Der Sperrmechanismus kann jedoch alternativ oder zusätzlich über eine Seitwärtsbewegung des Betätigungselements, einer Bewegung in Richtung senkrecht zur Bewegungsbahn des Betätigungselements und/oder durch eine Betätigung eines Entsperrelements gelöst werden. Ein derartiger lösbarer Sperrmechanismus erhöht die Fahrbetriebssicherheit, da die Bremsen eines Anhängefahrzeuges nicht mehr versehentlich inaktiv geschaltet werden können.

Vorteilhafterweise wird bei Erreichen der Anhängerkontrollstellung das Anhängefahrzeug erst nach Ablauf einer vorbestimmten Zeitdauer in den ungebremsten Zustand geschaltet. Auch durch diese Maßnahme kann die Fahrbetriebssicherheit erhöht werden. Selbst dann, wenn unbeabsichtigterweise das Betätigungselement in die Anhängerkontrollstellung bewegt worden ist, ist das Anhängefahrzeug nicht unmittelbar ungebremst. Bei einer unbeabsichtigten Aktivierung der Anhängerkontrollstellung tritt somit kein sofortiger Verlust von Bremswirkung auf. Der Fahrer kann vielmehr die Anhängerkontrollstellung wieder verlassen, ohne dass das Anhängefahrzeug ungebremst gewesen wäre.

Das Betätigungselement einer erfindungsgemäßen Betätigungseinrichtung ist vorzugsweise als schwenkbarer Hebel, als dosierbarer Drehschalter, als dosierbarer Taster, insbesondere Wipptaster, als ein linear bewegbarer Schieber oder ein linear bewegbarer dosierbarer Druckknopf, ein linear bewegbarer Zugknopf oder ein linear bewegbarer Druck-Zugknopf ausgebildet.

Nachfolgend wird die Erfindung näher anhand eines Hebel-Betätigungselements, eines dosierbaren Drehschalters und eines dosierbaren Tasters in jeweils verschiedenen Ausgestaltungen erläutert.

Fig. 8 zeigt eine Betätigungseinrichtung 82, welche ein als Hebel ausgebildetes Betätigungselement 84 aufweist. Die Betätigungseinrichtung ist rein elektrisch ausgebildet und weist keine pneumatischen Anschlüsse auf. Die Betätigung der Parkbremse und ggf. der Streckbremsfunktion und Anhängerkontrollfunktion erfolgen auf rein elektrisch gesteuerter Weise. Das Betätigungselement 84 ist längs einer Bewegungsbahn 86 betätigbar. Wird es nicht betätigt, nimmt es die in Fig. 8 gezeigte Neutralstellung ein.

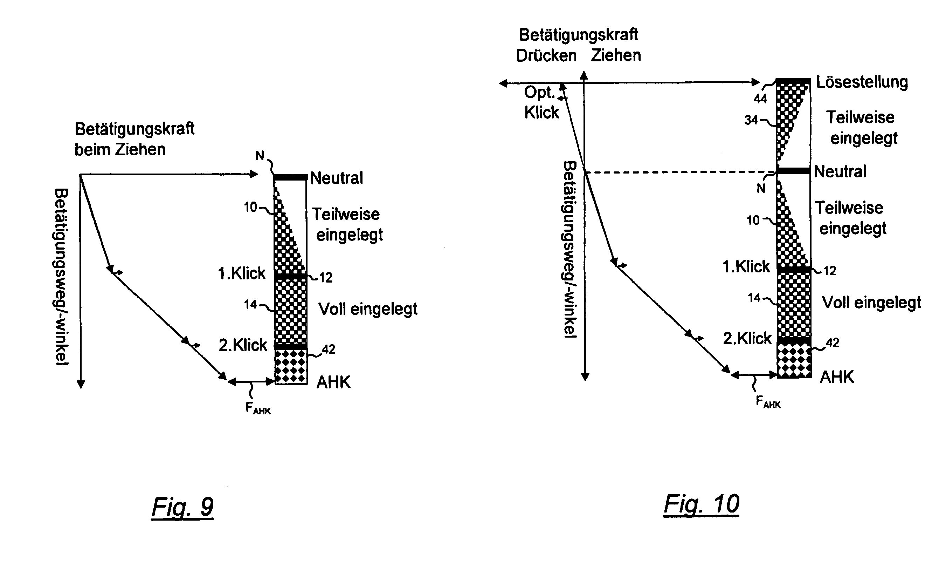

Fig. 9 zeigt die zur Betätigung des Betätigungselements 84 erforderliche Betätigungskraft in Abhängigkeit der Auslenkung des Betätigungselements entlang der Bewegungsbahn 86 aus der Neutralstellung. Die Betätigungseinrichtung weist eine Anhängerkontrollstellung AHK auf. Der in Fig. 9 dargestellte Verlauf der Betätigungskraft wird nachfolgend anhand einer Bewegung des Betätigungshebels gemäß Fig. 3 näher erläutert.

Zunächst ist die Parkbremse noch nicht eingelegt. Das Betätigungselement 84 befindet sich in der Neutralstellung N. Die Betätigungseinrichtung 82 befindet sich im sog. zweiten Modus, in dem eine auslenkungsabhängige Bremswirkung erzielbar ist. Der Fahrer betätigt nun das Betätigungselement 84 durch Ziehen des in Fig. 8 dargestellten Hebels in den ersten Auslenkbereich 10. Die Parkbremswirkung wird dabei in diesem Bereich über die Auslenkung, d.h. den Auslenkungsweg bzw. Auslenkungswinkel des Betätigungselements 84 entlang der Bewegungsbahn 86 dosiert. Lässt der Fahrer in diesem ersten Auslenkbereich 10 das Betätigungselement 84 los, stellt sich das Betätigungselement 84 automatisch in die Neutralstellung N zurück, wobei die Parkbremswirkung aufgehoben wird.

Zieht der Fahrer hingegen das Betätigungselement 84 über die erste Auslenkposition 12 hinweg, erhält er eine haptische und akustische Rückmeldung in Form eines ersten "Klicks" gemäß obigen Ausführungen. Diese Rückmeldung zeigt ihm an, dass nunmehr die volle Parkbremswirkung zur Verfügung steht, d.h. die Parkbremse voll eingelegt ist. Lässt er nun das Betätigungselement 84 los, erfolgt keine Änderung der Bremswirkung. D.h. die Parkbremse bleibt voll eingelegt. Beim (zweiten) Erreichen der ersten Auslenkposition 12 (auf dem Rückweg in Richtung der Neutralstellung) erfolgt nämlich eine Umschaltung in den sog. ersten Modus, indem die Parkbremse voll eingelegt ist bzw. bleibt.

In diesem ersten Modus verändert auch ein Loslassen des Betätigungselements 84 nicht die volle Parkbremswirkung.

Bei einem Ziehen des Betätigungselements durch den zweiten Auslenkbereich 14 ändert sich nichts am Zustand der Parkbremse; die Parkbremse bleibt voll eingelegt. Sobald jedoch der vierte Auslenkbereich 42 erreicht wird, erfolgt erneut eine haptische und akustische Rückmeldung in Form eines zweiten "Klicks". Diese Rückmeldung zeigt an, dass nun mit Erreichen des vierten Auslenkbereichs 42 die Anhängerkontrollstellung eingenommen worden ist bzw. durch Weiterführen des Betätigungselements bis zum Endanschlag eingenommen werden kann.

Die erforderliche Betätigungskraft zum Bewegen des Betätigungselements 84 in diese Anhängerkontrollstellung hat stetig mit dem Betätigungsweg bzw. Betätigungswinkel zugenommen. Die Betätigungskraft hat im ersten Auslenkbereich 10 jedoch mit einer geringeren Steigung zugenommen als im zweiten Auslenkbereich 14 bzw. vierten Auslenkbereich 42. Zum Aktivieren der Anhängerkontrollstellung ist zudem vorzugsweise eine zusätzliche Betätigungskraft F_{AHK}, ggf. in eine gegenüber der vorgenannten Betätigungskraft andere Richtung, aufzubringen.

Wenn nun der Fahrer das Betätigungselement 84 wieder in Richtung Neutralstellung N zurückführt, verlässt er zunächst die Anhängerkontrollstellung und insbesondere den vierten Auslenkbereich 42. Dabei hebt er die Anhängerkontrollfunktion auf. Er erhält wiederum eine haptische und akustische Rückmeldung in Form des zweiten "Klicks" beim Übergang in den zweiten Auslenkbereich 14. Im zweiten Auslenkbereich 14 bleibt die Parkbremse weiterhin voll eingelegt.

Führt nun der Fahrer das Betätigungselement weiter in Richtung Neutralstellung zurück, erhält er als haptische und akustische Rückmeldung wiederum einen ersten "Klick", die ihm den Übergang vom zweiten Auslenkbereich 14 in den ersten Auslenkbereich 10 signalisiert. Die Parkbremse bleibt dabei jedoch voll eingelegt, da im Bereich dieses Übergangs in den ersten Modus umgeschaltet wurde, in dem die volle Parkbremswirkung bereitgestellt wird. Selbst wenn das Betätigungselement 84 nun die Neutralstellung N erreicht, bleibt die Parkbremse weiterhin voll eingelegt. Zieht nun der Fahrer das Betätigungselement 84 erneut bis zur ersten Auslenkposition bzw. bis zum ersten "Klick", bleibt zwar weiterhin die volle Parkbremswirkung erhalten. Sobald der jedoch die erste Auslenkposition 12 überschritten hat, d.h. das Betätigungselement 84 in den zweiten Auslenkbereich 14 gezogen hat, kann eine Modusumschaltung erfolgen, in der anschließend die Parkbremse gelöst werden kann. Diese Modusumschaltung erfolgt vorzugsweise beim Übergang vom zweiten Auslenkbereich 14 in den ersten Auslenkbereich 10.

Lässt der Fahrer nunmehr das Betätigungselement 84 wieder zurück in die Neutralstellung N gelangen, d.h. von dem zweiten Auslenkbereich 14 zurück in den ersten Auslenkbereich, kann die Parkbremse im ersten Auslenkbereich 10 dosiert gelöst werden und zwar in Abhängigkeit der Auslenkung des Betätigungselements 84. Die Bremswirkung der Parkbremse hängt dabei von der Auslenkung, d.h. der Hebelposition, ab. Sobald die Neutralstellung N erreicht worden ist, ist die Parkbremswirkung vollständig aufgehoben.

Fig. 10 veranschaulicht eine beispielhafte Betätigung des Betätigungselements 84 gemäß Fig. 8, insbesondere die erforderliche Betätigungskraft in Abhängigkeit der Auslenkung des Betätigungselements 84 bei einer Bewegung des Betätigungselements entsprechend Fig. 4. Die Betätigungseinrichtung 82 weist wiederum eine Anhängerkontrollstellung AHK auf. Das Lösen der Parkbremse erfolgt jedoch nunmehr im dritten Auslenkbereich 34, wenn zuvor die Parkbremse voll eingelegt worden ist. Wiederum beginnt ein Bremsvorgang im zweiten Modus, indem eine Auslenkung des Betätigungselements 84 im ersten Auslenkbereich 10 eine Wirkung der Parkbremse in Abhängigkeit der Auslenkung des Betätigungselements 84 erzeugt. Das Betätigungselement 84 wird zunächst bis zur ersten Auslenkposition 12 gezogen, in der eine Bremswirkung der Parkbremse über den Auslenkungsweg bzw. den Auslenkungswinkel dosiert werden kann. Lässt der Fahrer in diesem ersten Auslenkbereich 10 das Betätigungselement 84 los, wird die Parkbremswirkung aufgehoben.

Zieht der Fahrer jedoch das Betätigungselement 84 über die erste Auslenkposition 12 hinweg, wird die Parkbremse voll eingelegt. Nunmehr verändert ein Loslassen des Betätigungselements 84 und damit eine Rückstellung in die Neutralstellung N die Parkbremswirkung nicht mehr. Die Parkbremse bleibt vielmehr voll eingelegt, auch wenn sich das Betätigungselement 84 im ersten Auslenkbereich 10 oder in der Neutralstellung befindet. Dies ist darauf zurückzuführen, dass die Betätigungseinrichtung 82 in einen ersten Modus umgeschaltet worden ist, indem die volle Parkbremswirkung zur Verfügung steht und zwar unabhängig von einer Auslenkung des Betätigungselements 84, insbesondere dem ersten Auslenkbereich 10. Wiederum erhält der Fahrer bei Überschreiten der ersten Auslenkposition 12 eine haptische und akustische Rückmeldung in Form des ersten "Klicks". Vorzugsweise erfolgt dabei die Umschaltung.

Zieht der Fahrer nunmehr das Betätigungselement weiter in Richtung von der Neutralstellung N weg, bleibt zunächst die volle Parkbremswirkung erhalten. Sobald das Betätigungselement 84 den Endanschlag bzw. den vierten Auslenkbereich 42 erreicht, wird die Anhängerkontrollfunktion aktiviert. Dabei erhält der Fahrer wiederum eine haptische und akustische Rückmeldung in Form des zweiten "Klicks".

Lässt der Fahrer nunmehr das Betätigungselement 84 weiter in Richtung der Neutralstellung N zurückgleiten, erhält er erneut bei Überschreiten des Grenzbereichs vom vierten Auslenkbereich 42 zum zweiten Auslenkbereich 14 eine haptische und akustische Rückmeldung in Form des zweiten "Klicks". Die Anhängerkontrollfunktion ist nun deaktiviert, während die Parkbremse ihre volle Parkbremswirkung beibehält.

Lässt der Fahrer das Betätigungselement 84 weiter in Richtung der Neutralstellung zurückgleiten, überschreitet das Betätigungselement 84 zunächst die erste Auslenkposition 12 und erreicht somit den ersten Auslenkbereich 10. Dabei findet jedoch kein Moduswechsel statt. Es tritt auch keine Änderung der Bremswirkung ein. Die Parkbremse bleibt voll eingelegt und zwar auch bei Erreichen der Neutralstellung N.

Drückt der Fahrer nunmehr das Betätigungselement 84 in den dritten Auslenkbereich 34, insbesondere an dessen Endanschlag oder über eine vierte Auslenkposition 44, bleibt zwar weiterhin zunächst die Bremswirkung der Parkbremse voll erhalten. Hierbei wird jedoch ein Moduswechsel herbeigeführt. D.h. bei einer Bewegung des Betätigungselements 84 in Richtung der Neutralstellung wird die Parkbremse gelöst und zwar in Abhängigkeit der Auslenkung des Bedienelements 84. Sobald das Bedienelement 84 die Neutralstellung erreicht, ist die Parkbremswirkung vollständig aufgehoben.

Der wesentliche Unterschied des anhand von Fig. 10 erläuterten Aufbaus der Betätigungseinrichtung im Vergleich zu dem anhand von Fig. 9 erläuterten Auf baus liegt darin, dass bei dem Aufbau gemäß Fig. 10 zum Lösen der Parkbremse das Betätigungselement in die entgegengesetzte Richtung bewegt werden muss, wie zum Einlegen der Parkbremse, während bei dem anhand von Fig. 9 erläuterten Aufbau zum Lösen der Parkbremse das Betätigungselement in die gleiche Richtung bewegt werden muss.

Ein Vorteil des anhand von Fig. 9 erläuterten Aufbaus der Betätigungseinrichtung 82 ist die Möglichkeit beim unbeabsichtigten Lösen der Parkbremse diese sofort wieder einlegen zu können. Demgegenüber muss bei dem anhand von Fig. 10 erläuterten Aufbau das Betätigungselement aus der Lösestellung, nämlich der vierten Auslenkposition 44 über die Neutralstellung N bewegt werden, so dass kurzfristig die Parkbremse tatsächlich vollständig gelöst ist. Durch eine schnelle Betätigung des Betätigungselements 84 kann jedoch die Bremswirkung der Parkbremse nahezu vollständig erhalten bleiben.

Ein weiterer Vorteil des anhand von Fig. 9 erläuterten Aufbaus ist die oben beschriebene Möglichkeit der Integration einer Streckbremsfunktion.

Die verschiedenen Schaltzustände der Betätigungseinrichtung, nämlich dosiertes Bremsen bzw. dosiertes Lösen der Bremse sowie volle Bremswirkung der Parkbremse und die Aktivierung einer Anhängerkontrollfunktion, können für den Fahrer haptisch getrennt werden. Dazu sind die genannten "Klicks" vorgesehen, welche vorteilhafterweise eine Änderung der Betätigungskraft beinhalten. Diese haptischen Rückmeldungen funktionieren vorteilhafterweise in beiden Betätigungsrichtungen des Betätigungselements 84. Sie behindern jedoch nicht ein Rückstellen des Betätigungselements in die Neutralstellung N.

Damit der Fahrer nicht unbeabsichtigterweise die Anhängerkontrollfunktion ausführt, ist vorteilhafterweise vorgesehen, im zweiten Auslenkbereich 14 und im vierten Auslenkbereich 42 eine größere Federkonstante vorzusehen als im ersten Auslenkbereich 10. Dies kann bspw. durch Aktivieren einer zweiten Feder im zweiten Auslenkbereich 14 und im vierten Auslenkbereich 42 realisiert werden.

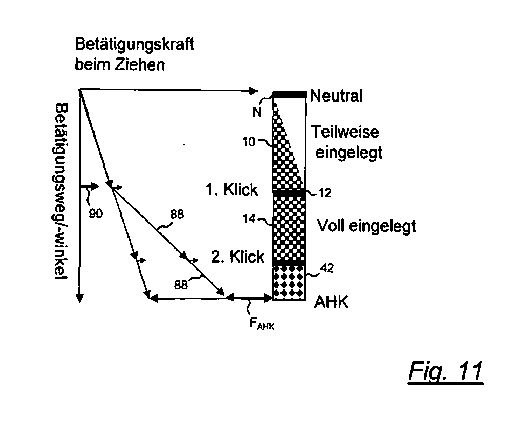

Alternativ oder zusätzlich ist ein Sperrmechanismus im Bereich der ersten Auslenkposition 12 oder im Bereich des zweiten "Klicks" vorgesehen, der durch Ziehen oder Drücken des Betätigungselements 84 oder eines weiteren Betätigungselements oder durch eine zusätzliche seitliche Bewegung in einer Schaltkulisse realisierbar ist. Derartige Sperrmechanismen verhindern jedoch nicht ein Rückstellen des Betätigungselements 84 in seine Neutralstellung. Ein derartiger Sperrmechanismus wirkt daher nur in eine Richtung. Fig. 11 veranschaulicht die Sicherheitsmechanismen zum Verhindern einer unbeabsichtigten Aktivierung der Anhängerkontrollstellung. Der Kräfteverlauf 88 ist durch die bereits beschriebene zweite Feder erzielbar.

Der Sperrmechanismus ist durch eine Kraft 90 veranschaulicht, welche eine zusätzliche Bewegungskomponente darstellt, um in die Anhängerkontrollstellung zu gelangen, bspw. durch Ziehen oder Drücken des gesamten Betätigungselements 84 oder eines weiteren Betätigungselements oder durch eine zusätzliche seitliche Bewegung in einer Schaltkulisse.

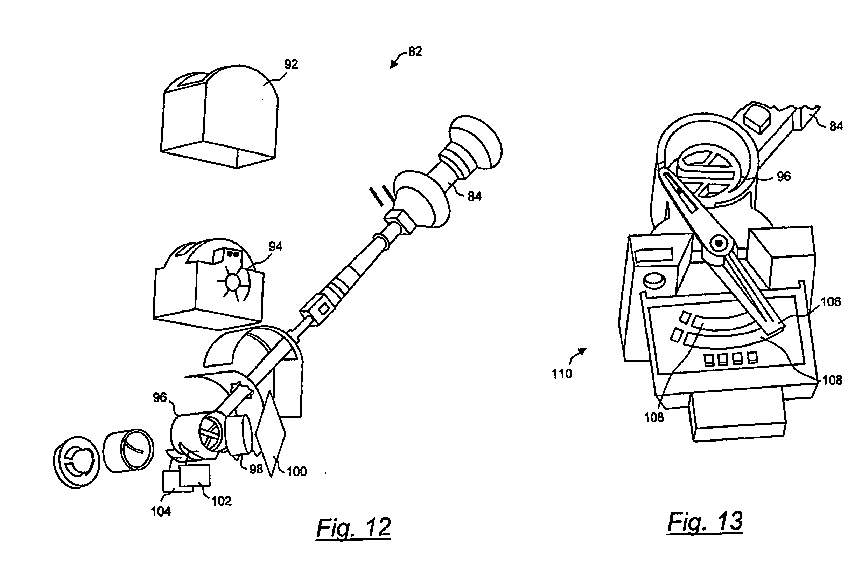

Fig. 12 veranschaulicht den Aufbau der Betätigungseinrichtung 82 mit Gehäuseteilen 92, 94 sowie einer in den Gehäuseteilen 92, 94 gelagerten Drehachse 96 bzw. Hebelwelle. Im Bereich der Drehachse 96 oder einem Abschnitt des Betätigungselements 84 befindet sich ein Magnet 98, der mit einem an einem der Gehäuseteile befestigten Hall-Sensorelement 100 zusammenwirkt, um eine Auslenkung des Betätigungselements 84 bestimmen zu können. Bei einer alternativen Ausführungsform sind der Magnet 98 und das Hall-Sensorelement 100 gegeneinander vertauscht.

Ferner sind an dem Betätigungselement 84 bzw. im Bereich des Betätigungselements 84 zwei Schaltelemente 102, 104 angeordnet, um verschiedene Schaltzustände der Betätigungseinrichtung 82 zu erfassen. Vorzugsweise werden als Schaltelemente Mikrotaster auf der Schaltkulisse der Drehachse 96 bzw. der Hebelwelle verwendet. Dabei sind die Schaltfenster dieser Mikrotaster derart ausgelegt, dass alle relevanten Schaltzustände, insbesondere der Zustand der gelösten Parkbremse, der komplett eingelegten Parkbremse sowie der nur teilweise eingelegten Parkbremse und der Anhängerkontrollstellung sicher erfasst werden können.

Ferner kann ein weiteres Schaltelement zum Erfassen einer Bewegung des Betätigungselements 84 vorgesehen sein, um in Erwiderung auf eine Bewegung des Betätigungselements elektrische bzw. elektronische Komponenten der Betätigungseinrichtung einzuschalten, wenn diese zuvor zur Einsparung elektrischer Energie in einen Ruhezustand mit keiner oder nur geringer Leistungsaufnahme geschaltet worden sind.

Fig. 13 zeigt einen alternativen Aufbau der Betätigungseinrichtung 82, bei der die Auslenkung des Betätigungselements 84 nicht über ein Hall-Sensorelement erfasst wird, sondern über ein Potentiometer 110. Hierzu ist die Drehachse 96 des Betätigungselements 84 über einen Hebelarm 106 mit zwei Schleifwiderständen 108 des Potentiometers 110 mechanisch verbunden. Je nach Stellung des Hebelarms 106 verändert sich der elektrische Widerstand des Potentiometers 110. Durch Beaufschlagung des Potentiometers 110 mit einer elektrischen Größe (Strom oder Spannung) erhält man ein elektrisches Signal, welches von der Auslenkung des Betätigungselements 84 abhängig ist.

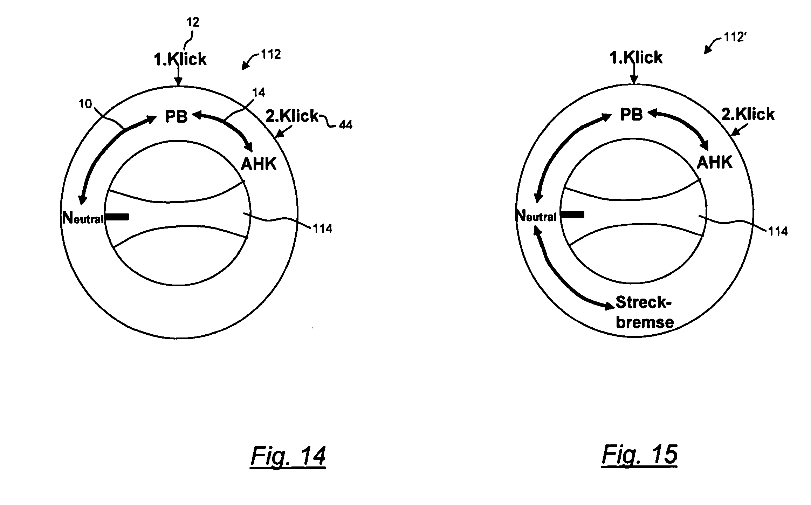

Die Fig. 14 bis 18 zeigen eine weitere Ausführungsform der Betätigungseinrichtung in Form eines dosierbaren Drehschalters 112. Der Drehschalter 112 weist ein in seiner Winkelstellung verdrehbares Betätigungselement 114 auf. Mittels des Drehschalters 112 kann in Abhängigkeit des Drehwinkels des Betätigungselements 114 ein elektrisches Signal, vorzugsweise proportional zum Auslenkungswinkel, generiert werden. Das Betätigungselement 114 wird stets per Federkraft in die in den Fig. 14 bis 18 dargestellte Neutralstellung zurückgedreht. Somit ist es möglich, die Parkbremse oder eine Streckbremse mit Hilfe eines dosierten Auslenkungswinkels oder eines dosierten Drehmoments zu steuern.

Das in Fig. 14 gezeigte Ausführungsbeispiel lässt sich anhand des in Fig. 3 gezeigten Verlaufs näher erläutern. Zunächst ist die Parkbremse noch nicht eingelegt. Die Betätigungseinrichtung 112 befindet sich im sog. zweiten Modus, indem die Parkbremswirkung abhängig von dem Auslenkungswinkel des Betätigungselements 114 ist.

Das Betätigungselement wird aus seiner Neutralstellung N gegen eine Federkraft im Uhrzeigersinn entlang des ersten Auslenkbereichs 10 gedreht, um eine Parkbremswirkung zu erzeugen, die von der Auslenkung bzw. dem Auslenkungswinkel abhängig ist. Ein Loslassen des Betätigungselements 114 führt aufgrund der Vorspannung mittels Federkraft zu einem Zurückstellen des Betätigungselements 114 in die Neutralstellung.

Nach Überwindung der ersten Auslenkposition 12 gelangt das Betätigungselement in den zweiten Auslenkbereich 14, in dem die Parkbremse voll eingelegt ist. Ein Loslassen des Betätigungselements 114 führt zu einem Zurückstellen des Betätigungselements 114 in die Neutralstellung N. Dabei wird die Parkbremse jedoch nicht eingelegt, da bei einem Überfahren dieser ersten Auslenkposition 12 ein Moduswechsel eintritt. Dabei wird der zweite Modus in den ersten Modus umgeschaltet, in dem die Parkbremse ihre volle Bremswirkung entfaltet.

Eine weitere Drehung des Betätigungselements 114 bis kurz vor die vierte Auslenkposition 44 führt zu keiner Änderung der Bremswirkung; die Parkbremse bleibt weiter vollständig eingelegt. Eine weitere Drehung über die vierte Auslenkposition 44 hinweg versetzt die Betätigungseinrichtung in die Anhängerkontrollstellung AHK.

Ein Überfahren der ersten Auslenkposition 12 erzeugt den bereits oben beschriebenen ersten "Klick", während ein Überfahren der vierten Auslenkposition 44 den oben beschriebenen zweiten "Klick" auslöst.

Führt der Fahrer nunmehr das Betätigungselement 114 aus der Anhängerkontrollstellung AHK zurück über die vierte Auslenkposition 44 in den zweiten Auslenkbereich 14, wird die Anhängerkontrollfunktion deaktiviert, während die Parkbremse voll eingelegt ist.

Ein Überfahren der ersten Auslenkposition 12 zurück in Richtung Neutralstellung N führt zu der oben bereits beschriebenen Modusänderung, so dass dann der erste Modus eingeschaltet wird, in dem die Parkbremse ihre volle Bremswirkung beibehält.

Selbst bei Erreichen der Neutralstellung N bleibt die Parkbremse vollständig eingelegt. Dreht nun der Fahrer das Betätigungselement 114 wieder bis in die erste Auslenkposition 12, tritt keine Änderung der Bremswirkung ein. Die Parkbremse bleibt vielmehr vollständig eingelegt.

Sobald der Fahrer jedoch das Betätigungselement 114 erneut über die erste Auslenkposition 12 hinweg dreht, tritt zwar zunächst immer noch keine Änderung der Bremswirkung ein, da ohnehin das Betätigungselement sich nunmehr in der zweiten Auslenkposition 14 befindet, in der die Parkbremse voll eingelegt ist. Lässt er jedoch nunmehr das Betätigungselement 114 los, erfolgt bei Überschreiten der ersten Auslenkposition 12 ein Lösen der Parkbremse, wobei die Parkbremswirkung von dem Auslenkungswinkel des Betätigungselements 114 abhängt. Somit ist ein dosiertes Lösen der Parkbremse möglich. Sobald das Betätigungselement 114 wieder die Neutralstellung erreicht, ist die Parkbremswirkung vollständig aufgehoben.

Fig. 15 veranschaulicht den Drehschalter 112' mit einer Streckbremsfunktion. Er entspricht weitgehend dem in Fig. 14 gezeigten Drehschalter, wobei jedoch nunmehr das Betätigungselement 114 zusätzlich auch gegen den Uhrzeigersinn zur Erzielung einer Streckbremsfunktion gedreht werden kann.

Der Drehschalter 112' gemäß Fig. 15 funktioniert bei einer Drehung im Uhrzeigersinn wie der anhand von Fig. 14 erläuterte Drehschalter 112. Bei einer Drehung gegen den Uhrzeigersinn wird jedoch - wie anhand von Fig. 6 erläutert - eine Streckbremsfunktion ausgeführt, bei der die Streckbremswirkung abhängig von der Auslenkung des Betätigungselements 114 ist. D.h. je stärker die Auslenkung gegen den Uhrzeigersinn ist, desto größer ist die Wirkung der Streckbremse. Bei einem Loslassen des Betätigungselements 114 wird wiederum die Neutralstellung erreicht und die Streckbremse deaktiviert.

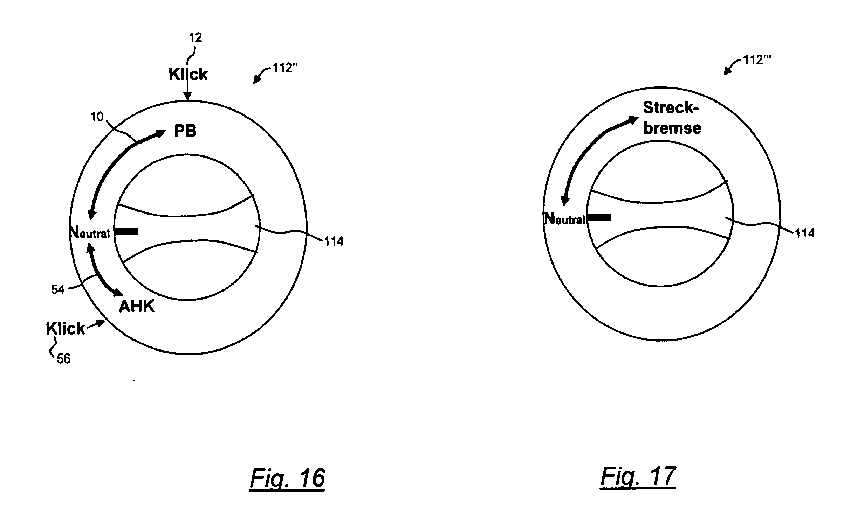

Fig. 16 zeigt ein weiteres Ausführungsbeispiel eines Drehschalters 112". Der Drehschalter 112" ist geeignet zum Realisieren eines Auslenkungsverlaufs gemäß Fig. 5. Auf die Ausführungen zu Fig. 5 wird daher verwiesen. Im Einzelnen lässt sich die Funktion wie folgt erläutern. Zunächst ist die Parkbremse noch nicht eingelegt. Der Drehschalter 112" befindet sich im sog. zweiten Modus, bei dem eine Bremswirkung abhängig ist von einer Auslenkung des Betätigungselements 114. Zunächst wird der Drehschalter aus der Neutralstellung gegen die Federkraft im Uhrzeigersinn gedreht, um eine Bremswirkung der Parkbremse zu erzeugen. Die Bremswirkung wird dabei über den Auslenkungswinkel dosiert. Ein Loslassen des Betätigungselements 114 im ersten Auslenkbereich 10 führt zu einer Rückstellung des Betätigungselements 114 in die Neutralstellung und damit zu einer Aufhebung der Bremswirkung.

Nach Überwindung der ersten Auslenkposition 12 wird die Parkbremse voll eingelegt, d.h. entfaltet ihre volle Bremswirkung. Dabei erhält der Fahrer erneut eine haptische Rückmeldung in Form eines ersten "Klicks". Lässt er nunmehr das Betätigungselement 114 los, überschreitet das Betätigungselement 114 wiederum die erste Auslenkposition 12, wobei eine Modusänderung stattfindet und zwar von dem zweiten Modus in den sog. ersten Modus, bei dem die Parkbremse ihre volle Bremswirkung auch dann entfaltet, wenn sich das Betätigungselement 114 im ersten Auslenkbereich 110 oder in Neutralstellung befindet.

Nachdem die Neutralstellung erreicht worden ist, wobei die Parkbremse ihre volle Bremswirkung beibehält, wird das Betätigungselement 114 erneut bis zur ersten Auslenkposition 12 gedreht, wobei jedoch noch immer keine Änderung der Bremswirkung der Parkbremse eintritt. Die Parkbremse bleibt voll eingelegt. Erfolgt hingegen eine Überschreitung der ersten Auslenkposition 12, d.h. des ersten "Klicks", tritt zwar zunächst immer noch keine Änderung der Bremswirkung ein. Wird jedoch nunmehr das Betätigungselement losgelassen, überfährt das Betätigungselement 114 die erste Auslenkposition 12 in Richtung der Neutralstellung N. Dabei findet eine Modusänderung vom ersten Modus in den zweiten Modus statt, bei dem die Bremswirkung abhängig ist von dem Auslenkungswinkel des Betätigungselements 114. Ein dosiertes Lösen der Parkbremse ist somit nun möglich. Wenn die Neutralstellung N erreicht wird, ist die Parkbremswirkung vollständig aufgehoben.

Durch eine Drehung des Betätigungselements 14 aus der Neutralstellung gegen den Uhrzeigersinn in den fünften Auslenkbereich 54 wird nach Überwindung der sog. fünften Auslenkposition 56 ein weiterer "Klick" erzeugt und dabei die Anhängerkontrollstellung aktiviert.

Durch die beschriebenen "Klicks" erhält der Fahrer - wie oben erläutert - eine haptische und akustische Rückmeldung über die jeweils überschrittene Position des Betätigungselements 114.

Durch ein Loslassen des Betätigungselements bzw. durch ein Zurückdrehen über die fünfte Auslenkposition 46 wird erneut ein "Klick" erzeugt und die Anhängerkontrollstellung deaktiviert.

Fig. 17 veranschaulicht einen Drehschalter 112"' zur Realisierung einer Streckbremsfunktion, wie er vorteilhafterweise in einer Betätigungseinrichtung für die Parkbremse integriert sein kann. Wird das Betätigungselement 114 aus der Neutralstellung N gegen die Federkraft im Uhrzeigersinn gedreht, wird eine der Auslenkung entsprechende Streckbremswirkung erzeugt. Beim Loslassen des Betätigungselements 114 wird dieses wieder in die Neutralstellung zurückgestellt und dabei die Streckbremse deaktiviert. Die in Fig. 17 gezeigte Funktion kann vorteilhafterweise in ein und demselben Drehschalter integriert sein, der im Zusammenhang mit den Fig. 14 und 16 erläutert worden ist, wobei dieser Betätigungsmodus als Streckbremse durch einen Umschalter am Drehschalter erreicht wird.

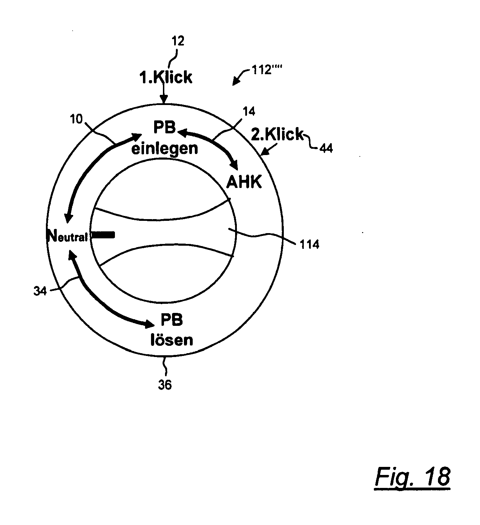

Fig. 18 veranschaulicht eine weitere Ausführungsform eines Drehschalters 112"" zur Ausführung einer Betätigung gemäß Fig. 4. Zunächst ist die Parkbremse noch nicht eingelegt. Der Drehschalter befindet sich im zweiten Modus, bei dem die Parkbremswirkung abhängig ist von einer Auslenkung des Betätigungselements 114.

Sodann wird das Betätigungselement 114 aus der Neutralstellung N gegen die Federkraft im Uhrzeigersinn gedreht. Dabei wird eine Parkbremswirkung in Abhängigkeit der Auslenkung innerhalb des ersten Auslenkbereichs 10 erzielt. Bei Erreichen der ersten Auslenkposition 12 bzw. des ersten "Klicks" wird die Parkbremse voll eingelegt. Durch eine weitere Drehung über den zweiten Auslenkbereich 14 und die vierte Auslenkposition 44 bzw. über den zweiten "Klick" erfolgt in der Anhängerkontrollstellung AHK eine Aktivierung der Anhängerkontrollfunktion. Bei einem Loslassen des Betätigungselements 114 und einer Zurückführung des Betätigungselements 114 über die vierte Auslenkposition 44 wird die Anhängerkontrollstellung AHK verlassen und die Anhängerkontrollfunktion aufgehoben, wobei jedoch die Parkbremse eingelegt ist. Bei einem weiteren Zurückdrehen des Betätigungselements und einem Erreichen der Neutralstellung bleibt die Parkbremse eingelegt. Bei einer weiteren Drehung des Betätigungselements 114 gegen den Uhrzeigersinn in einen dritten Auslenkbereich erfolgt zwar zunächst noch keine Änderung der Bremswirkung, d.h. die Parkbremse bleibt voll eingelegt. Sofern jedoch die dritte Auslenkposition 36 erreicht und eine entsprechender "Klick" ausgelöst wird, erfolgt - vorzugsweise bei einem Zurückdrehen in Richtung der Neutralstellung N - ein Moduswechsel, bei dem die Parkbremswirkung abhängig von der Auslenkung des Betätigungselements 114 ist. Dadurch wird ein dosierbares Lösen der Parkbremse erreicht. Bei Erreichen der Neutralstellung ist dann die Parkbremswirkung aufgehoben.

Ähnlich wie bei der im Zusammenhang mit den Fig. 8 bis 13 erläuterten Betätigungseinrichtung wird vorzugsweise bei einem Drehschalter gemäß den Fig. 14 bis 18 die Auslenkung, insbesondere der Auslenkungswinkel in ein analoges Signal umgesetzt. Dabei werden vorzugsweise wiederum Sensorelemente, wie Hall-Sensorelemente oder Potentiometer, eingesetzt.

Auch bei den im Zusammenhang mit den Fig. 14 bis 18 erläuterten Drehschaltern sind vorzugsweise Mechanismen vorhanden, um ein unbeabsichtigtes Aktivieren der Anhängerkontrollstellung zu verhindern. Diese sind vorzugsweise, wie oben bereits beschrieben, ausgebildet. Bspw. kann eine Aktivierung einer zweiten Feder nach Überwinden des ersten "Klicks" eine deutlich größere Betätigungskraft erfordern, um in die Anhängerkontrollstellung zu gelangen. Dies vermindert das Risiko einer unbeabsichtigten Aktivierung der Anhängerkontrollstellung.

Zusätzlich oder alternativ ist ein Sperrmechanismus vorgesehen, der ein weiteres Drehen nach dem Überwinden des ersten Klicks bzw. der ersten Auslenkposition 12 verhindert. Der Sperrmechanismus kann bspw. durch eine zusätzliche Zug- oder Druckbewegung des Drehelements oder durch Betätigung eines entsprechenden mechanischen Schaltelements gelöst werden. Der Sperrmechanismus wirkt jedoch nur in eine Richtung, nämlich in Richtung der Anhängerkontrollstellung, nicht jedoch in Richtung der Neutralstellung. Vielmehr kann das Betätigungselement 114 jederzeit frei in die Neutralstellung zurückfedern.

Schaltzustandsänderungen des Drehschalters werden dem Fahrer durch haptische, optische und/oder akustische Rückmeldung angezeigt. Eine haptische Rückmeldung erfolgt insbesondere über eine Betätigungskraftänderung. Sie wird vorliegend mit "Klick" bezeichnet.

Ferner kann auch ein Drehschalter gemäß den Fig. 14 bis 18 mit Mikroschaltern zur Plausibilitätsprüfung verwendet werden. Die Schaltfenster sind dabei derart ausgelegt, dass alle relevanten Schaltzustände erfasst werden können, insbesondere der Schaltzustand einer vollständig gelösten Parkbremse, einer vollständig eingelegten Parkbremse, einer nur teilweise eingelegten Parkbremse sowie einer Anhängerkontrollstellung und ggf. auch einer Streckbremsaktivierung.

Vorteilhafterweise werden die Mikroschalter von einer Schaltkulisse betätigt, die sich auf einer Drehachse des Drehschalters befinden.

Vorteilhafterweise erfolgt die primäre Drehrichtung, d.h. zur Einlegung der Parkbremse im Uhrzeigersinn, was für eine Bedienung mit der rechten Hand vorteilhaft ist.

Ferner ist der Drehschalter derart ausgerichtet, dass die Neutralstellung des Betätigungselements sich in einer horizontalen Lage befindet. Hierdurch kann ein größtmöglicher Drehbereich im Uhrzeigersinn bereitgestellt werden.

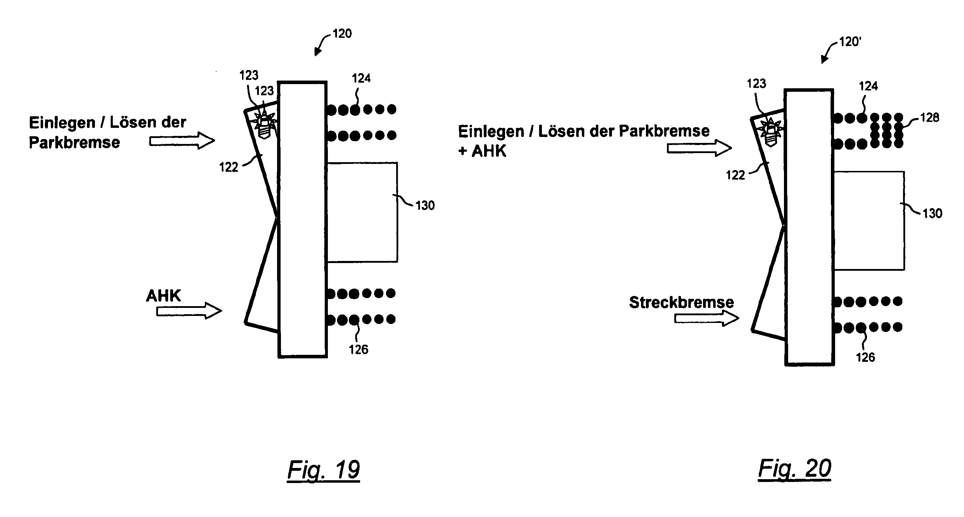

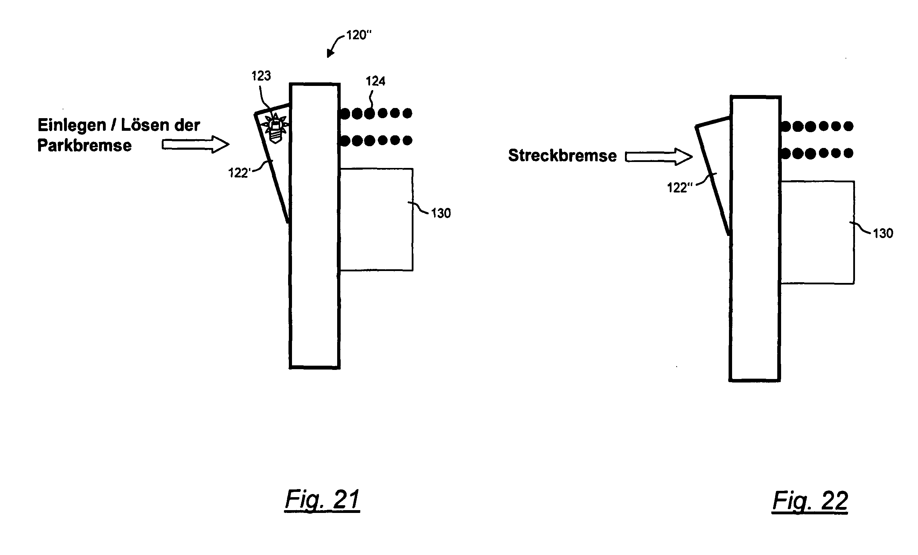

Fig. 19 bis 24 veranschaulichen eine als dosierbarer Taster ausgebildete Betätigungseinrichtung. Vorteilhafterweise ist der Taster als Wipptaster ausgebildet, wie im Zusammenhang mit den Fig. 19, 20, 23 und 24 nachfolgend näher erläutert. Der Taster kann jedoch auch als einfacher Taster ausgebildet sein, wie anhand der Fig. 21 und 22 gezeigt. Die Bremswirkung der Parkbremse soll jedoch mittels aller dieser Taster stufenlos regulierbar sein, wobei die Bremswirkung abhängig von der Tasterauslenkung aus seiner Neutralstellung ist.

Der Taster gibt zu diesem Zweck ein vorzugsweise analoges Signal proportional zu seiner Auslenkung, d.h. seinem Auslenkungsweg bzw. Auslenkungswinkel, aus. Der Taster ist dabei gegen eine Federkraft vorgespannt und wird mit dieser Federkraft in eine Neutralstellung zurückgedrückt. Somit ist es möglich, die Parkbremse oder die Streckbremse mit Hilfe einer dosierten Tasterkraft zu steuern.

Ein erstes Tasterkonzept wird anhand von Fig. 19 erläutert. Mittels dieses Tasterkonzepts kann ein Bewegungsablauf gemäß Fig. 5 durchgeführt werden. Auf die Ausführungen im Zusammenhang zu Fig. 5 wird daher verwiesen.

Die als Wipptaster ausgebildete Betätigungseinrichtung 120 weist ein Betätigungselement 122, nämlich die eigentliche Tasterwippe, auf. Das Betätigungselement 122 wird durch zwei Federn 124, 126 in die Neutralstellung gedrückt. Die obere Feder 124 ist vorzugsweise mit einer progressiven Kennlinie ausgestattet. Entsprechendes gilt für die untere Feder 126. Die Federn können jedoch auch degressive oder proportionale Kennlinien aufweisen.

Ein Einlegen bzw. Lösen der Parkbremse erfolgt durch eine Betätigung des oberen Abschnitts des Betätigungselements 122. Die Bremswirkung der Parkbremse steigt mit der Größe der Betätigungskraft und zwar entweder proportional, degressiv oder progressiv und/oder in Abhängigkeit eines Beladungszustandes des Fahrzeugs bzw. des Fahrzeugzuges bestehend aus einem Zugfahrzeug und einem Anhängefahrzeug. Die Information über den Beladungszustand wird bspw. über einen Datenbus, insbesondere CAN-Bus bezogen.

Die Parkbremse wird entweder am Endanschlag der Auslenkung des oberen Abschnitts des Betätigungselements 122 oder nach Überwinden eines zusätzlichen Betätigungswiderstandes, insbesondere eines "Klicks", eingelegt.

Ferner erfolgt vorzugsweise eine Rückmeldung über den Zustand der eingelegten Parkbremse durch ein optisches Anzeigeinstrument, insbesondere eine im Schalter integrierte Lampe 123, d.h. durch ein optisches Signal. Zusätzlich oder alternativ erfolgt eine Rückmeldung über ein akustisches Mittel, z.B. einen Summer oder Lautsprecher.

Wenn sich das Betätigungselement 122 nicht mehr am Endanschlag befindet, den o.g. "Klick" (erneut) überwindet oder in die Neutralstellung gelangt, findet ein Moduswechsel statt, nämlich vom zweiten Modus in den ersten Modus. In diesem Modus ist die Parkbremse auch dann eingelegt ist, wenn sich das Betätigungselement in der Neutralstellung oder im ersten Auslenkbereich befindet.

Wird der Taster nochmals bis zum Anschlag oder einer ersten Auslenkposition, insbesondere einem "Klick" bewegt, so wird die Parkbremse gelöst und der Modus umgeschaltet und zwar in den sog. zweiten Modus, indem die Parkbremswirkung abhängig ist von der Auslenkung des Tasters.

Die Anhängerkontrollstellung AHK wird durch einen Druck auf einen unteren Abschnitt des Betätigungselements 122 gesteuert. Hierzu ist lediglich ein binäres Signal erforderlich, welches von einem entsprechenden elektronischen Element erzeugt wird. Bei Erreichen des Anschlags oder Überwinden der fünften Auslenkposition wird die Anhängerkontrollfunktion aktiviert.

Fig. 20 zeigt ein weiteres Ausführungsbeispiel einer Betätigungseinrichtung 120', das zur Ausführung einer Bewegung gemäß Fig. 6 herangezogen werden kann. Auf die Erläuterungen zu Fig. 6 wird daher Bezug genommen.

Die Parkbremse wird durch Betätigen des oberen Abschnitts des Betätigungselements 122 eingelegt und gelöst. Die Wirkung der Parkbremse ist dabei abhängig von der Größe der Betätigungskraft, wie bereits im Zusammenhang mit Fig. 19 beschrieben. Alternativ oder zusätzlich ist sie abhängig vom Beladungszustand des Fahrzeugs bzw. Fahrzeugzuges.

Die Parkbremse wird nach Überwinden einer ersten Auslenkposition 12 vollständig eingelegt, wobei der Fahrer eine haptische Rückmeldung in Form des o.g. "Klicks" erhält.

Vorteilhafterweise erhält der Fahrer zugleich eine Rückmeldung über den Schaltzustand, nämlich dass die Parkbremse vollständig eingelegt ist, durch eine im Schalter integrierte Lampe oder ein anderes Anzeigeinstrument.

Sofern der Taster weiter bis zum Anschlag oder zumindest eine vierte Auslenkposition gedrückt wird, erfolgt eine Aktivierung der Anhängerkontrollfunktion. Bei Erreichen des Anschlages bzw. der vierten Auslenkposition wird zusätzlich zum analogen Signal ein binäres Schaltsignal erzeugt und an eine Steuerung gesendet.

Ein unbeabsichtigtes Aktivieren der Anhängerkontrollstellung wird durch eine zusätzliche Feder 128 verhindert. Zusätzlich oder alternativ wird ein derartiges unbeabsichtigtes Aktivieren der Anhängerkontrollstellung durch Abwarten einer vorbestimmten Zeitdauer erreicht, bevor die Anhängerkontrollstellung aktiviert wird.

Zusätzlich wird vorteilhafterweise ein optisches oder akustisches Signal bei Aktivierung der Anhängerkontrollstellung erzeugt, um dem Fahrer die Aktivierung der Anhängerkontrollfunktion anzuzeigen.

Sobald sich der Taster nicht mehr am Anschlag bzw. der vierten Auslenkposition 44 befindet, wird die Anhängerkontrollfunktion deaktiviert.

Wenn sich der Taster über die erste Auslenkposition 12 hinwegbewegt, wird ein Moduswechsel durchgeführt. Dabei wird der erste Modus der Betätigungseinrichtung eingenommen, um die volle Parkbremswirkung bereitzustellen, auch wenn das Betätigungselement 122 sich im ersten Auslenkbereich 10 oder in der Neutralstellung befindet. Die Parkbremse bleibt somit auch dann eingelegt, wenn die Neutralstellung eingenommen wird. Wird das Betätigungselement 122 nunmehr nochmals über die erste Auslenkposition 12, insbesondere in Richtung der Neutralstellung bewegt, so wird erneut der Modus umgeschaltet, so dass die Parkbremswirkung abhängig von der Auslenkung des Betätigungselements ist. Die Parkbremse kann somit dosiert gelöst werden, während das Betätigungselement 122 in Richtung der Neutralstellung zurückgeführt wird.

Der untere Abschnitt des Betätigungselements 122 wird zur Betätigung der Streckbremse verwendet. Dieser Abschnitt ist ebenfalls federbelastet und wird daher bei einer fehlenden Betätigung des Betätigungselements 122 zurück in seine Neutralstellung gestellt. Die Auslenkung des Betätigungselements 122 bei Betätigung des unteren Abschnitts des Betätigungselements 122 ist dabei maßgeblich für die Bremswirkung der Streckbremse. D.h. die Streckbremswirkung steigt mit der Auslenkung bzw. der Größe der Betätigungskraft, insbesondere proportional, degressiv oder progressiv mit der Betätigungskraft bzw. der Auslenkung, und/oder in Abhängigkeit des Beladungszustandes des Fahrzeugs, Zugfahrzeugs, Anhängefahrzeugs bzw. Fahrzeugzuges.

Die in Fig. 21 gezeigte Betätigungseinrichtung 120" weist lediglich ein als einfacher Taster ausgebildetes Betätigungselement 122' auf. Dieses ist jedoch genauso aufgebaut wie das im Zusammenhang mit Fig. 19 erläuterte Betätigungselement 122, jedoch ohne die dort dargestellte und erläuterte Anhängerkontrollstellung. Es fehlt daher der untere Abschnitt des Betätigungselements sowie die Feder 126 gegenüber den in Fig. 19 und 20 gezeigten Ausführungsbeispielen.

Fig. 22 veranschaulicht ein weiteres Betätigungselement 122" zur Betätigung einer Streckbremse. Dieses Betätigungselement 122 ist als dosierbarer Taster ausgeführt, der vorzugsweise gegen eine Feder wirkt, die eine progressive Kennlinie aufweist. Die Wirkung der Streckbremse steigt mit der Auslenkung des Betätigungselements 122" oder mit der Größe der Betätigungskraft, insbesondere proportional, degressiv oder progressiv. Zusätzlich oder alternativ ist die Streckbremswirkung abhängig vom Beladungszustand des Zugfahrzeuges oder des Fahrzeugzuges.

Das Betätigungselement 122" ist separat zu den Betätigungselementen gemäß den Fig. 19 bis 21 vorgesehen. Alternativ kann es jedoch auch in einer Betätigungseinrichtung gemäß der Fig. 19 oder der Fig. 21 integriert sein und die Streckbremsfunktion nach Betätigung eines Umschalters wirksam werden.

In allen Ausführungsbeispielen gemäß den Fig. 19 bis 24 weist die jeweilige Betätigungseinrichtung eine Sensorik 130 auf, mittels der wenigstens ein analoges und ggf. ein oder mehrere binäre Schaltsignale in Abhängigkeit der Auslenkung des jeweiligen Betätigungselements erzeugbar sind.

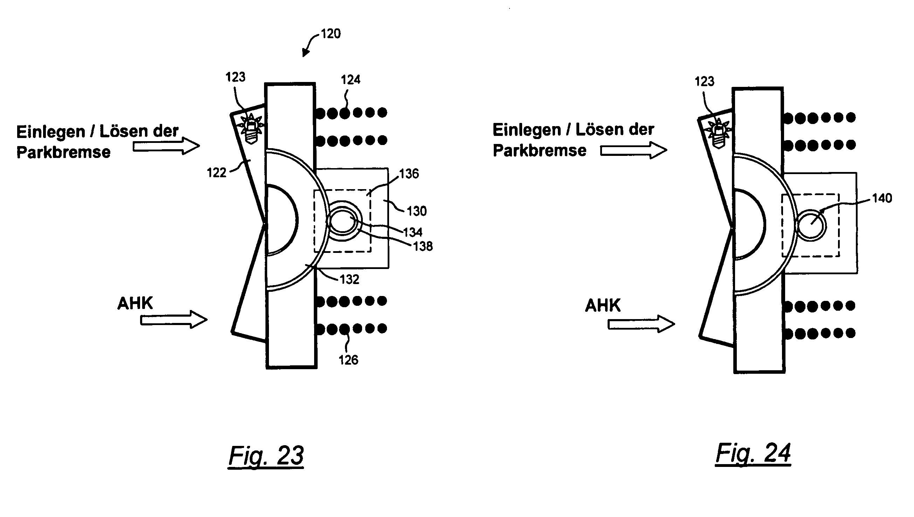

Fig. 23 und 24 zeigen die anhand von Fig. 19 erläuterte Betätigungseinrichtung in einer detaillierteren Darstellung. Zur Umsetzung der Auslenkung des Betätigungselements 122 in ein elektrisches Signal, insbesondere ein analoges Signal, welches der Auslenkung bzw. der erforderlichen Betätigungskraft entspricht, sind in den Fig. 23 und 24 zwei unterschiedliche konstruktive Ausführungsformen dargestellt.

Gemäß Fig. 23 wird über eine Zahnscheibe 132 ein Zahnrad 134 angetrieben, dessen Radius kleiner ist als der Radius der Zahnscheibe 132. Das Zahnrad 134 wirkt mit einem auf einer Platine angeordneten Hall-Sensorelement 136 oder einem Potentiometer zusammen. Das Zahnrad 134 ist mit einem Magneten 138 verbunden, um in Zusammenwirkung mit dem Hall-Sensorelement 136 und der Sensorik 130 ein der Auslenkung entsprechendes Signal zu erzeugen. Die Anordnung von Hall-Sensorelement 136 und Magnet ist bei einer Alternative vertauscht.

Bei dem in Fig. 24 dargestellten Ausführungsbeispiel ist statt des Hall-Sensorelements und des Magneten 138 ein Potentiometer 140 vorgesehen.

Die Zahnscheibe 132 und das Zahnrad 134 bilden ein Getriebe, das eine Verstärkung der relativ geringen Winkelauslenkung des Betätigungselements 122 bewirkt, um eine besseren Signalauflösung und Trennung der Schaltpunkte von möglichen zusätzlichen Tastern zu ermöglichen.

Ein weiterer Vorteil ist die Verlegung der Sensorik vom Drehpunkt des Betätigungselements 122 weg in einen Bauraum jenseits des Betätigungselements, insbesondere im Falle einer in ein Armaturenbrett eingebauten Betätigungseinrichtung 120 in den Bauraum unter bzw. hinter dem Armaturenbrett. Auf diese Weise kann die Betätigungseinrichtung in die Tiefe gebaut werden, so dass die nach außen gerichtete Oberseite der Betätigungseinrichtung dicht mit dem Armaturenbrett abschließt und die mechanischen und elektronischen Bauteile der Betätigungseinrichtung innerhalb des Armaturenbretts liegen.

Bei einem alternativen Ausführungsbeispiel erfolgt eine Aufbereitung des Sensorsignals mittels einer linearen Sensorbewegung mit einem Linearpotentiometer oder mit einem entlang einem Hall-Sensorelement verschiebbaren Magneten.

Wie bereits anhand den obigen Ausführungsbeispielen einer Betätigungseinrichtung mit einem Hebel bzw. einem dosierbaren Drehschalter erläutert, weisen vorteilhaftweise auch die anhand der Fig. 19 bis 24 erläuterten Betätigungseinrichtungen 120 Mikroschalter für ein Plausibilitätsprüfung auf. Dabei sind die Schaltfenster dieser Mikroschalter derart ausgelegt, dass alle relevanten Schaltzustände des Betätigungselements sicher erfasst werden können, insbesondere der Schaltzustand der gelösten Parkbremse, der teilweise eingelegten Parkbremse, der vollständig eingelegten Parkbremse, der Anhängerkontrollstellung sowie einer Aktivierung der Streckbremsfunktion.

Bei einer weiteren vorteilhaften Ausführungsform werden diese Mikroschalter von einer Schaltkulisse betätigt, die direkt von dem Zahnrad 134 angetrieben werden, um eine bessere Signaltrennung zu ermöglichen und um geringere Fertigungstolleranzen zu benötigen.

Mittels der dargestellten Betätigungseinrichtungen kann die Parkbremse nicht nur zum Feststellen des Fahrzeuges, sondern auch zum Unterstützen der Betriebsbremse während des Fahrbetriebs und somit als Hilfsbremse eingesetzt werden. Eine fein abstimmbare Dosierung der Bremswirkung ist mittels der dargestellten Betätigungseinrichtungen möglich. Je größer die Auslenkung des jeweiligen Betätigungselements, desto größer ist die Bremswirkung der Parkbremse. Dieses Bedienungskonzept entspricht auch einer von der Fußbremse bekannten Bremsbetätigung und kann daher intuitiv insbesondere in Stresssituationen bedient werden. Man erhält somit eine Bremsanlage mit Parkbremse und Betriebsbremse und zwar mit einer Hilfsbremsfunktion.

Die Erfindung betrifft nicht nur die detailliert erläuterten Betätigungseinrichtungen, sondern auch Parkbremseinrichtungen, insbesondere elektrische oder e-lektropneumatische Parkbremseinrichtungen für Fahrzeuge, insbesondere Nutzfahrzeuge, mit einer derartigen Betätigungseinrichtung. Ferner betrifft die Erfindung auch komplette Bremsanlagen für Fahrzeuge, insbesondere Nutzfahrzeuge mit einer für den Fahrbetrieb vorgesehenen Betriebsbremse und einer zum Feststellen des Fahrzeugs vorgesehenen Parkbremse mit einer derartigen Parkbremseinrichtung.

## Patentansprüche

1. Betätigungseinrichtung für eine Bremsanlage eines Fahrzeugs, insbesondere Nutzfahrzeugs, mit einer für den Fahrbetrieb vorgesehenen Betriebsbremse und einer zum Feststellen des Fahrzeugs vorgesehenen Parkbremse,
wobei mittels der Parkbremse eine Bremswirkung unabhängig von einer Bremswirkung der Betriebsbremse erzeugbar ist,
wobei die Betätigungseinrichtung (82, 112, 120) ein manuell betätigbares Betätigungselement (84, 114, 122) zur Betätigung der Parkbremse aufweist, das entlang einer Bewegungsbahn (86) auslenkbar ist,
wobei die Betätigungseinrichtung (82, 112, 120) mehrere Schaltzustände aufweist,
wobei in einem ersten Schaltzustand die Bremswirkung der Parkbremse von der Auslenkung des Betätigungselements (84, 114, 122) entlang der Bewegungsbahn (86) abhängig und in einem zweiten Schaltzustand die volle Bremswirkung der Parkbremse bereitstellbar ist,
wobei das Betätigungselement (84, 114, 122) derart vorgespannt ist, dass es ohne äußere Einwirkung eine vorbestimmte Neutralstellung (N) einnimmt,
wobei benachbart zu der Neutralstellung (N) ein von einer sog. ersten Auslenkposition (12) begrenzter sog. erster Auslenkbereich (10) vorgesehen ist, in dem die Betätigungseinrichtung (82, 112, 120) den ersten Schaltzustand einnehmen kann,
wobei benachbart zu dem ersten Auslenkbereich (10), jedoch von der Neutralstellung (N) beabstandet, ein sog. zweiter Auslenkbereich (14) oder eine sog. zweite Auslenkposition (16) vorgesehen ist, in dem bzw. der die Betätigungseinrichtung (82, 112, 120) den zweiten Schaltzustand einnimmt,
**dadurch gekennzeichnet, dass**
die Betätigungseinrichtung (82, 112, 120) derart ausgebildet ist, dass sie in einem ersten Modus und bei einer Position des Betätigungselements (84, 114, 122) im ersten Auslenkbereich (10), in der Neutralstellung (N) oder in einem der Neutralstellung (N) benachbarten, jedoch vom ersten Auslenkbereich (10) beabstandeten und von einer sog. dritten Auslenkposition (36) begrenzten sog. dritten Auslenkbereich (34) den zweiten Schaltzustand aufweist und dass sie in einem zweiten Modus und bei einer Position des Betätigungselements im ersten Auslenkbereich (10), in der Neutralstellung (N) oder in dem dritten Auslenkbereich (34) den ersten Schaltzustand aufweist,
wobei der erste Modus in den zweiten Modus **dadurch** umschaltbar ist, dass das Betätigungselement (84, 114, 122) eine erste Umschaltposition und der zweite Modus in den ersten Modus **dadurch** umschaltbar ist, dass das Betätigungselement (84, 114, 122) eine zweite Umschaltposition einnimmt.

2. Betätigungseinrichtung nach Anspruch 1, **dadurch gekennzeichnet, dass** die erste Umschaltposition und/oder die zweite Umschaltposition innerhalb des ersten Auslenkbereichs (10) oder mit der ersten Auslenkposition (12) übereinstimmend angeordet sind.

3. Betätigungseinrichtung nach Anspruch 2, **dadurch gekennzeichnet, dass** die erste Umschaltposition und die zweite Umschaltposition übereinstimmend angeordnet sind.

4. Betätigungseinrichtung nach Anspruch 1, **dadurch gekennzeichnet, dass** die erste Umschaltposition innerhalb des ersten Auslenkungsbereichs (10) oder mit der ersten Auslenkposition (12) übereinstimmend und die zweite Umschaltposition innerhalb des dritten Auslenkbereichs (34) oder mit der dritten Auslenkposition (36) übereinstimmend angeordnet ist.

5. Betätigungseinrichtung nach einem der vorhergehenden Ansprüche, **dadurch gekennzeichnet, dass** die Betätigungseinrichtung (82, 112, 120) eine Anhängerkontrollstellung (AHK) aufweist, bei der eine Anhängerkontrollfunktion bei einer Position des Betätigungselements (84, 114, 122) in einem sog. vierten Auslenkbereich (42) oder einer innerhalb des vierten Auslenkbereichs (42) vorgesehenen sog. vierten Auslenkposition (44) aktivierbar ist, der benachbart zum zweiten Auslenkbereich (14) bzw. der zweiten Auslenkposition (16), jedoch vom ersten Auslenkbereich (10) beabstandet angeordnet ist, wobei in der Anhängerkontrollstellung (AHK) die Betätigungseinrichtung (82, 112, 120) den zweiten Schaltzustand für ein als Zugfahrzeug dienendes Fahrzeug aufweist und ein am Zugfahrzeug angehängtes Anhängefahrzeug in einen ungebremsten Zustand schaltbar ist.

6. Betätigungseinrichtung nach einem der Ansprüche 1 bis 4, **dadurch gekennzeichnet, dass** die Betätigungseinrichtung (82, 112, 120) eine Anhängerkontrollstellung (AHK) aufweist, bei der eine Anhängerkontrollfunktion bei einer Position des Betätigungselements (84, 114, 122) in einem sog. fünften Auslenkbereich (54) oder einer innerhalb des fünften Auslenkbereichs (54) vorgesehenen sog. fünften Auslenkposition (56) aktivierbar ist, der bzw. die benachbart zur Neutralstellung (N), jedoch vom ersten Auslenkbereich (10) beabstandet vorgesehen ist, wobei in der Anhängerkontrollstellung (AHK) die Betätigungseinrichtung (82, 112, 120) den zweiten Schaltzustand für ein als Zugfahrzeug dienendes Fahrzeug aufweist und ein am Zugfahrzeug angehängtes Anhängefahrzeug in einen ungebremsten Zustand schaltbar ist.

7. Betätigungseinrichtung nach einem der Ansprüche 1 bis 4, **dadurch gekennzeichnet, dass** die Betätigungseinrichtung (82, 112, 120) eine Streckbremsfunktion aufweist, die bei einer Position des Betätigungselements (84, 114, 122) in einem von einer sog. sechsten Auslenkposition (66) begrenzten sog. sechsten Auslenkbereich (64) betätigbar ist, der benachbart zur Neutralstellung (N), jedoch vom ersten Auslenkbereich (10) beabstandet vorgesehen ist, wobei bei einer Stellung des Betätigungselements (84, 114, 122) im sechsten Auslenkbereich (64) nur die Bremsen eines an ein als Zugfahrzeug dienendes Fahrzeug angehängten Anhängefahrzeugs betätigbar sind, wobei die Bremswirkung dieser Bremsen von der Auslenkung des Betätigungselements (84, 114, 122) aus der Neutralstellung (N) abhängig ist.

8. Betätigungseinrichtung nach einem der Ansprüche 1 bis 6, **dadurch gekennzeichnet, dass** die Betätigungseinrichtung (82, 112, 120) ein weiteres manuell betätigbares sog. Streckbremsbetätigungselement zur Bereitstellung einer Streckbremsfunktion aufweist, das entlang einer Bewegungsbahn auslenkbar ist, wobei das Streckbremsbetätigungselement derart vorgespannt ist, dass es ohne äußere Einwirkung eine vorbestimmte Neutralstellung einnimmt, wobei mittels des Streckbremsbetätigungselements nur die Bremsen eines an ein als Zugfahrzeug dienendes Fahrzeug angehängten Anhängefahrzeuges betätigbar sind, wobei die Bremswirkung dieser Bremsen von der Auslenkung des Betätigungselements (84, 114, 122) aus der Neutralstellung (N) abhängig ist.

9. Betätigungseinrichtung nach einem der Ansprüche 1 bis 6, **dadurch gekennzeichnet, dass** die Betätigungseinrichtung (82, 112, 120) einen Umschalter zum Umschalten zwischen einem Parkbremsmodus und einem Streckbremsmodus aufweist, wobei bei eingeschaltetem Streckbremsmodus das Betätigungselement (84, 114, 122) zur Bereitstellung einer Streckbremsfunktion dient, wobei mittels des Betätigungselements (84, 114, 122) nur die Bremsen eines an ein als Zugfahrzeug dienendes Fahrzeug angehängten Anhängefahrzeugs betätigbar sind, wobei die Bremswirkung dieser Bremsen von der Auslenkung des Betätigungselements (84, 114, 122) aus der Neutralstellung (N) abhängig ist.

10. Betätigungseinrichtung nach einem der vorhergehenden Ansprüche, **dadurch gekennzeichnet, dass** die Bremswirkung der Parkbremse im ersten Schaltzustand proportional, degressiv oder progressiv von der Auslenkung des Betätigungselements (84, 114, 122) abhängig ist.

11. Betätigungseinrichtung nach einem der Anspruche 7 bis 10, **dadurch gekennzeichnet, dass** die von der Streckbremsfunktion erzeugbare Bremswirkung proportional, degressiv oder progressiv von der Auslenkung des Betätigungselements (84, 114, 122) bzw. Streckbremsbetätigungselements abhängig ist.

12. Betätigungseinrichtung nach Anspruch 10 oder 11, **dadurch gekennzeichnet, dass** die jeweilige Bremswirkung zusätzlich von einem Beladungszustand abhängig ist.

13. Betätigungseinrichtung nach einem der vorhergehenden Ansprüche, **dadurch gekennzeichnet, dass** eine zur Auslenkung des Betätigungselements (84, 114, 122) und ggf. des Streckbremsbetätigungselements erforderliche Betätigungskraft mit der Auslenkung aus der Neutralstellung (N) zunimmt.

14. Betätigungselement nach Anspruch 13, **dadurch gekennzeichnet, dass** die zur Auslenkung des Betätigungselements (84, 114, 122) erforderliche Betätigungskraft im ersten Auslenkbereich (10) von der Neutralstellung (N) bis zur ersten Auslenkposition (12) proportional mit der Auslenkung und mit einer ersten Proportionalitätskonstanten und im zweiten Auslenkbereich (14) proportional mit einer weiteren Auslenkung mit einer zweiten Proportionalitätskonstanten zunimmt, wobei die zweite Proportionalitätskonstante größer ist als die erste Proportionalitätskonstante.

15. Betätigungseinrichtung nach Anspruch 14, **dadurch gekennzeichnet, dass** das Betätigungselement (84, 114, 122) mittels Federkraft vorgespannt ist, wobei im ersten Auslenkbereich (10) eine erste Feder (124) das Betätigungselement (84, 114, 122) vorspannt und im zweiten Auslenkbereich (14) die erste Feder (124) und eine zusätzliche zweite Feder (128) das Betätigungselement (84, 114, 122) vorspannen und wobei die erste Proportionalitätskonstante eine Federkonstante der ersten Feder (124) ist und sich die zweite Proportionalitätskonstante aus der ersten Federkonstanten und einer der zweiten Feder (128) zugeordneten zweiten Federkonstanten ergibt.

16. Betätigungseinrichtung nach einem der vorhergehenden Ansprüche, **dadurch gekennzeichnet, dass** die Betätigungseinrichtung (82, 112, 120) derart ausgebildet ist, dass bei einer Bewegung des Betätigungselements (84, 114, 122) über die erste Auslenkposition (12), die innerhalb des ersten Auslenkbereichs (10) liegende erste Umschaltposition und/oder die innerhalb des ersten Auslenkbereichs (10) liegende zweite Umschaltposition hinweg in der Bewegungsrichtung von der Neutralstellung (N) weg oder zu der Neutralstellung hin oder in beiden Bewegungsrichtungen, jeweils entlang der Bewegungsbahn, eine haptische, akustische und/oder optische Rückmeldung für eine Bedienperson des Betätigungselements (84, 114, 122) erzeugbar ist.

17. Betätigungseinrichtung nach einem der vorhergehenden Ansprüche, **dadurch gekennzeichnet, dass** die Betätigungseinrichtung (82, 112, 120) derart ausgebildet ist, dass bei einer Bewegung des Betätigungselements (84, 114, 122) über die dritte Auslenkposition (36) und/oder die innerhalb des dritten Auslenkbereichs (34) liegende zweite Umschaltposition hinweg in einer Bewegungsrichtung von der Neutralstellung weg oder in beiden Bewegungsrichtungen, jeweils entlang der Bewegungsbahn, eine haptische, akustische und/oder optische Rückmeldung für eine Bedienperson des Betätigungselements erzeugbar ist.

18. Betätigungseinrichtung nach einem der Ansprüche 5 bis 16, **dadurch gekennzeichnet, dass** die Betätigungseinrichtung (82, 112, 120) derart ausgebildet ist, dass bei einer Bewegung des Betätigungselements (84, 114, 122) über einen Grenzbereich zwischen zweitem Auslenkbereich (14) und viertem Auslenkbereich (42) hinweg, insbesondere in beiden Bewegungsrichtungen, jeweils entlang der Bewegungsbahn, eine haptische, akustische und/oder optische Rückmeldung für die Bedienperson erzeugbar ist.

19. Betätigungseinrichtung nach einem der Ansprüche 6 bis 16, **dadurch gekennzeichnet, dass** die Betätigungseinrichtung (82, 112, 120) derart ausgebildet ist, dass bei einer Bewegung des Betätigungselements (84, 114, 122) über die fünfte Auslenkposition (56) hinweg, insbesondere in beiden Bewegungsrichtungen, jeweils entlang der Bewegungsbahn, eine haptische, akustische und/oder optische Rückmeldung für die Bedienperson erzeugbar ist.

20. Betätigungseinrichtung nach einem der Ansprüche 16 bis 19, **dadurch gekennzeichnet, dass** die haptische Rückmeldung mittels einer Änderung der erforderlichen Betätigungskraft zur Änderung der Auslenkung des Betätigungselements (84, 114, 122) erzeugbar ist.

21. Betätigungseinrichtung nach einem der Ansprüche 5 bis 20, **gekennzeichnet durch** einen lösbaren Sperrmechanismus, der eine Bewegung des Betätigungselements (84, 114, 122) von der Neutralstellung (N) kommend in den vierten Auslenkbereich (42) oder fünften Auslenkbereich (54) bzw. in die vierte Auslenkposition (44) oder fünfte Auslenkposition (56) verhindert, jedoch eine Bewegung von dem vierten (42) oder fünften (54) Auslenkbereich bzw. von der vierten (44) oder fünften (56) Auslenkposition in Richtung der Neutralstellung (N) gestattet.

22. Betätigungseinrichtung nach Anspruch 21, **dadurch gekennzeichnet, dass** der Sperrmechanismus mittels Ausübung einer zusätzlichen Kraft auf das Betätigungselement (84, 114, 122), einer Seitwärtsbewegung des Betätigungselements (84, 114, 122), einer Bewegung in einer Richtung senkrecht zur Bewegungsrichtung des Betätigungselements (84, 114, 122) und/oder durch eine Betätigung eines Entsperrelements lösbar ist.

23. Betätigungseinrichtung nach einem der vorhergehenden Ansprüche, **gekennzeichnet durch** ein, zwei oder mehr als zwei mit dem Betätigungselement (84, 114, 122) mechanisch in Verbindung stehenden Potentiometer (110, 140) und/oder Hall-Sensorelemente (100, 136) mittels denen ein elektrisches Signal erzeugbar ist, dessen Amplitude im ersten Schaltzustand und im zweiten Modus von der Auslenkung des Betätigungselements (84, 114, 122) abhängig ist.

24. Betätigungseinrichtung nach einem der vorhergehenden Ansprüche, **gekennzeichnet durch** einen oder mehrere mit dem Betätigungselement (84, 114, 122) in Verbindung stehende Schaltelemente (102, 104), die derart angeordnet sind, um die Schaltzustände getrennt zu erfassen.

25. Betätigungseinrichtung nach einem der vorhergehenden Ansprüche, **dadurch gekennzeichnet, dass** die Betätigungseinrichtung (82, 112, 120) derart ausgebildet ist, dass bei Erreichen einer maximalen Auslenkung des Betätigungselements (84, 114, 122), insbesondere bei Erreichen eines Anschlags ein binäres Schaltsignal erzeugbar ist.

26. Betätigungseinrichtung nach einem der vorhergehenden Ansprüche, **gekennzeichnet durch** ein Schaltelement zum Erfassen einer Bewegung des Betätigungselements (84, 114, 122), wobei in Erwiderung auf eine Bewegung des Betätigungselements (84, 114, 122) mittels des Schaltelements elektrische Komponenten der Betätigungseinrichtung (82, 112, 120) einschaltbar sind, wobei diese elektrischen Komponenten nach Ablauf eines Ruhezeitintervalls ausschaltbar sind.

27. Betätigungseinrichtung nach einem der vorhergehenden Ansprüche, **gekennzeichnet durch** optische Anzeigemittel zum Anzeigen des zweiten Schaltzustandes.

28. Betätigungseinrichtung nach Anspruch 27, **dadurch gekennzeichnet, dass** die optischen Anzeigemittel in das Betätigungselement (84, 114, 122) integriert sind.

29. Betätigungseinrichtung nach einem der Ansprüche 5 bis 28, **dadurch gekennzeichnet, dass** in der Anhängerkontrollstellung das Anhängefahrzeug erst nach Ablauf einer vorbestimmten Zeitdauer in den ungebremsten Zustand schaltbar ist.

30. Betätigungseinrichtung nach einem der vorhergehenden Ansprüche, **dadurch gekennzeichnet, dass** das Betätigungselement (84, 114, 122) ein Getriebe aufweist, um eine mechanische Verstärkung der Auslenkung des Betätigungselements (84, 114, 122) zu erzeugen.

31. Betätigungseinrichtung nach einem der vorhergehenden Ansprüche, **dadurch gekennzeichnet, dass** das Betätigungselement ein schwenkbarer Hebel (84), ein dosierbarer Drehschalter (112), ein dosierbarer Taster (120), insbesondere Wipptaster, ein linear bewegbarer Schieber oder ein linear bewegbarer dosierbarer Druckknopf, ein linear bewegbarer Zugknopf oder ein linear bewegbarer Druck-Zugknopf ist.

32. Parkbremseinrichtung, insbesondere elektrische oder pneumatische Parkbremseinrichtung für ein Fahrzeug, insbesondere Nutzfahrzeug, mit einer für den Fahrbetrieb vorgesehenen Betriebsbremse und einer zum Feststellen des Fahrzeugs vorgesehenen Parkbremse, wobei mittels der Parkbremse eine Bremswirkung unabhängig von einer Bremswirkung der Betriebsbremse erzeugbar ist, **dadurch gekennzeichnet, dass** die Parkbremseinrichtung eine Betätigungseinrichtung (82, 112, 120) nach einem der Ansprüche 1 bis 31 aufweist.

33. Bremsanlage für ein Fahrzeug, insbesondere Nutzfahrzeug, mit einer für den Fahrbetrieb vorgesehenen Betriebsbremse und einer zum Feststellen des Fahrzeugs vorgesehenen Parkbremse, **gekennzeichnet durch** eine Parkbremseinrichtung nach Anspruch 32.

## Claims

1. Actuating device for a brake system of a vehicle, in particular utility vehicle, having a service brake provided for driving operation and having a parking brake provided for immobilizing the vehicle,
wherein by means of the parking brake, a braking action can be generated independently of a braking action of the service brake,
wherein the actuating device (82, 112, 120) has a manually actuable actuating element (84, 114, 122) for actuating the parking brake, which actuating element (84, 114, 122) can be deflected along a movement path (86),
wherein the actuating device (82, 112, 120) has a plurality of switching states,
wherein in a first switching state, the braking action of the parking brake can be provided in a manner dependent on the deflection of the actuating element (84, 114, 122) along the movement path (86), and in a second switching state, the full braking action of the parking brake can be provided,
wherein the actuating element (84, 114, 122) is preloaded in such a way that it assumes a predetermined neutral position (N) when not subjected to external action,
wherein adjacent to the neutral position (N) there is provided a so-called first deflection region (10) which is delimited by a so-called first deflection position (12) and in which the actuating device (82, 112, 120) can assume the first switching state,
wherein adjacent to the first deflection region (10) but spaced apart from the neutral position (N) there is provided a so-called second deflection region (14) or a so-called second deflection position (16), in which the actuating device (82, 112, 120) assumes the second switching state,
**characterized in that**
the actuating device (82, 112, 120) is designed so as to be in the second switching state when it is in a first mode and when the actuating element (84, 114, 122) is positioned in the first deflection region (10), in the neutral position (N) or in a so-called third deflection region (34) which is adjacent to the neutral position (N) but spaced apart from the first deflection region (10) and delimited by a so-called third deflection position (36), and so as to be in the first switching state when it is in a second mode and when the actuating element is in the first deflection region (10), in the neutral position (N) or in the third deflection region (34), wherein the first mode can be switched over to the second mode by virtue of the actuating element (84, 114, 122) assuming a first switchover position, and the second mode can be switched over to the first mode by virtue of the actuating element (84, 114, 122) assuming a second switchover position.

2. Actuating device according to Claim 1, **characterized in that** the first switchover position and/or the second switchover position are/is arranged within the first deflection region (10) or so as to correspond to the first deflection position (12).

3. Actuating device according to Claim 2, **characterized in that** the first switchover position and the second switchover position are arranged so as to correspond.

4. Actuating device according to Claim 1, **characterized in that** the first switchover position is arranged within the first deflection region (10) or so as to correspond to the first deflection position (12), and the second switchover position is arranged within the third deflection region (34) or so as to correspond to the third deflection position (36).

5. Actuating device according to one of the preceding claims, **characterized in that** the actuating device (82, 112, 120) has a trailer testing position (AHK) in which a trailer testing function can be activated when the actuating element (84, 114, 122) is positioned in a so-called fourth deflection region (42) or in a so-called fourth deflection position (44) provided within the fourth deflection region (42), which fourth deflection region is arranged adjacent to the second deflection region (14) or the second deflection position (16) but spaced apart from the first deflection region (10), wherein in the trailer testing position (AHK), the actuating device (82, 112, 120) is in the second switching state for a vehicle serving as a tractor vehicle, and a trailer vehicle attached to the tractor vehicle can be switched into a non-braked state.

6. Actuating device according to one of Claims 1 to 4, **characterized in that** the actuating device (82, 112, 120) has a trailer testing position (AHK) in which a trailer testing function can be activated when the actuating element (84, 114, 122) is positioned in a so-called fifth deflection region (54) or in a so-called fifth deflection position (56) provided within the fifth deflection region (54), which fifth deflection region or fifth deflection position is provided adjacent to the neutral position (N) but spaced apart from the first deflection region (10), wherein in the trailer testing position (AHK), the actuating device (82, 112, 120) is in the second switching state for a vehicle serving as a tractor vehicle, and a trailer vehicle attached to the tractor vehicle can be switched into a non-braked state.

7. Actuating device according to one of Claims 1 to 4, **characterized in that** the actuating device (82, 112, 120) has an anti-jackknifing braking function which can be actuated when the actuating element (84, 114, 122) is positioned in a so-called sixth deflection region (64) which is delimited by a so-called sixth deflection position (66) and which is provided adjacent to the neutral position (N) but spaced apart from the first deflection region (10), wherein when the actuating element (84, 114, 122) is positioned in the sixth deflection region (64), only the brakes of a trailer vehicle attached to a vehicle serving as a tractor vehicle can be actuated, wherein the braking action of said brakes is dependent on the deflection of the actuating element (84, 114, 122) out of the neutral position (N).

8. Actuating device according to one of Claims 1 to 6, **characterized in that** the actuating device (82, 112, 120) has a further, manually actuable so-called anti-jackknifing braking actuating element for providing an anti-jackknifing braking function, which anti-jackknifing braking actuating element can be deflected along a movement path, wherein the anti-jackknifing braking actuating element is preloaded in such a way as to assume a predetermined neutral position when not subjected to external action, wherein by means of the anti-jackknifing braking actuating element, only the brakes of a trailer vehicle attached to a vehicle serving as a tractor vehicle can be actuated, wherein the braking action of said brakes is dependent on the deflection of the actuating element (84, 114, 122) out of the neutral position (N).

9. Actuating device according to one of Claims 1 to 6, **characterized in that** the actuating device (82, 112, 120) has a switchover means for switching over between a parking braking mode and an anti-jackknifing braking mode, wherein when the anti-jackknifing braking mode is activated, the actuating element (84, 114, 122) serves for providing an anti-jackknifing braking function, wherein by means of the actuating element (84, 114, 122), only the brakes of a trailer vehicle attached to a vehicle serving as a tractor vehicle can be actuated, wherein the braking action of said brakes is dependent on the deflection of the actuating element (84, 114, 122) out of the neutral position (N).

10. Actuating device according to one of the preceding claims, **characterized in that** the braking action of the parking brake in the first switching state is proportionally, degressively or progressively dependent on the deflection of the actuating element (84, 114, 122).

11. Actuating device according to one of Claims 7 to 10, **characterized in that** the braking action that can be generated by the anti-jackknifing braking function is proportionally, degressively or progressively dependent on the deflection of the actuating element (84, 114, 122) or anti-jackknifing braking actuating element.

12. Actuating device according to Claim 10 or 11, **characterized in that** the respective braking action is additionally dependent on a loading state.

13. Actuating device according to one of the preceding claims, **characterized in that** an actuating force required for deflecting the actuating element (84, 114, 122) and if appropriate the anti-jackknifing braking actuating element increases with deflection out of the neutral position (N).

14. Actuating device according to Claim 13, **characterized in that** the actuating force required for deflecting the actuating element (84, 114, 122) increases proportionally with deflection and with a first proportionality constant in the first deflection region (10) from the neutral position (N) to the first deflection position (12), and increases proportionally with further deflection and with a second proportionality constant in the second deflection region (14), wherein the second proportionality constant is greater than the first proportionality constant.

15. Actuating device according to Claim 14, **characterized in that** the actuating element (84, 114, 122) is preloaded by means of spring force, wherein in the first deflection region (10), a first spring (124) preloads the actuating element (84, 114, 122), and in the second deflection region (14), the first spring (124) and an additional second spring (128) preload the actuating element (84, 114, 122), and wherein the first proportionality constant is a spring constant of the first spring (124) and the second proportionality constant is a combination of the first spring constant and of a second spring constant assigned to the second spring (128).

16. Actuating device according to one of the preceding claims, **characterized in that** the actuating device (82, 112, 120) is designed such that, if the actuating element (84, 114, 122) is moved through the first deflection position (12), through the first switchover position which lies within the first deflection region (10) and/or through the second switchover position which lies within the first deflection region (10) in the movement direction away from the neutral position (N) or towards the neutral position or in either movement direction, in each case along the movement path, a haptic, acoustic and/or visual feedback signal can be generated for an operator of the actuating element (84, 114, 122).

17. Actuating device according to one of the preceding claims, **characterized in that** the actuating device (82, 112, 120) is designed such that, if the actuating element (84, 114, 122) is moved through the third deflection position (36) and/or through the second switchover position which lies within the third deflection region (34) in a movement direction away from the neutral position or in either movement direction, in each case along the movement path, a haptic, acoustic and/or visual feedback signal can be generated for an operator of the actuating element.

18. Actuating device according to one of Claims 5 to 16, **characterized in that** the actuating device (82, 112, 120) is designed such that, if the actuating element (84, 114, 122) is moved through a boundary region between the second deflection region (14) and the fourth deflection region (42), in particular in either movement direction, in each case along the movement path, a haptic, acoustic and/or visual feedback signal can be generated for the operator.

19. Actuating device according to one of Claims 6 to 16, **characterized in that** the actuating device (82, 112, 120) is designed such that, if the actuating element (84, 114, 122) is moved through the fifth deflection position (56), in particular in either movement direction, in each case along the movement path, a haptic, acoustic and/or visual feedback signal can be generated for the operator.

20. Actuating device according to one of Claims 16 to 19, **characterized in that** the haptic feedback signal can be generated by means of a change in the actuating force required for changing the deflection of the actuating element (84, 114, 122).

21. Actuating device according to one of Claims 5 to 20, **characterized by** a releasable locking mechanism which prevents a movement of the actuating element (84, 114, 122) into the fourth deflection region (42) or fifth deflection region (54), or into the fourth deflection position (44) or fifth deflection position (56), proceeding from the neutral position (N), but permits a movement from the fourth (42) or fifth (54) deflection region or from the fourth (44) or fifth (56) deflection position in the direction of the neutral position (N).

22. Actuating device according to Claim 21, **characterized in that** the locking mechanism can be released by means of the exertion of an additional force on the actuating element (84, 114, 122), a sideward movement of the actuating element (84, 114, 122), a movement in a direction perpendicular to the movement direction of the actuating element (84, 114, 122), and/or by means of an actuation of an unlocking element.

23. Actuating device according to one of the preceding claims, **characterized by** one, two or more than two potentiometers (110, 140) and/or Hall sensor elements (100, 136) which are mechanically connected to the actuating element (84, 114, 122) and by means of which an electrical signal can be generated, the amplitude of which, in the first switching state and in the second mode, is dependent on the deflection of the actuating element (84, 114, 122).

24. Actuating device according to one of the preceding claims, **characterized by** one or more switching elements (102, 104) which are connected to the actuating element (84, 114, 122) and which are arranged so as to detect separately the switching states.

25. Actuating device according to one of the preceding claims, **characterized in that** the actuating device (82, 112, 120) is designed such that, when a maximum deflection of the actuating element (84, 114, 122) is reached, in particular when a stop is reached, a binary switching signal can be generated.

26. Actuating device according to one of the preceding claims, **characterized by** a switching element for detecting a movement of the actuating element (84, 114, 122), wherein electrical components of the actuating device (82, 112, 120) can be activated by means of the switching element in response to a movement of the actuating element (84, 114, 122), wherein said electrical components can be deactivated after a rest time interval has elapsed.

27. Actuating device according to one of the preceding claims, **characterized by** visual display means for displaying the second switching state.

28. Actuating device according to Claim 27, **characterized in that** the visual display means are integrated into the actuating element (84, 114, 122).

29. Actuating device according to one of Claims 5 to 28, **characterized in that**, in the trailer testing position, the trailer vehicle can be switched into the non-braked state only after a predetermined time period has elapsed.

30. Actuating device according to one of the preceding claims, **characterized in that** the actuating element (84, 114, 122) has a mechanism for mechanically boosting the deflection of the actuating element (84, 114, 122).

31. Actuating device according to one of the preceding claims, **characterized in that** the actuating element is a pivotable lever (84), a measuredly adjustable rotary switch (112), a measuredly adjustable tip switch (120), in particular rockertype tip switch, a linearly movable slide or a linearly movable, measuredly adjustable push button, a linearly movable pull button or a linearly movable push/pull button.

32. Parking brake device, in particular electric or pneumatic parking brake device for a vehicle, in particular utility vehicle, having a service brake provided for driving operation and having a parking brake provided for immobilizing the vehicle, wherein by means of the parking brake, a braking action can be generated independently of a braking action of the service brake, **characterized in that** the parking brake device has an actuating device (82, 112, 120) according to one of Claims 1 to 31.

33. Brake system for a vehicle, in particular utility vehicle, having a service brake provided for driving operation and having a parking brake provided for immobilizing the vehicle, **characterized by** a parking brake device according to Claim 32.

## Revendications

1. Dispositif d'actionnement pour une installation de freinage d'un véhicule, en particulier d'un véhicule utilitaire, comprenant un frein de service prévu pour le mode de conduite et un frein de stationnement prévu pour immobiliser le véhicule,
une action de freinage pouvant être produite au moyen du frein de stationnement indépendamment d'une action de freinage du frein de service,
le dispositif d'actionnement (82, 112, 120) présente un élément d'actionnement (84, 114, 122) pouvant être actionné manuellement pour l'actionnement du frein de stationnement, lequel peut être dévié le long d'une piste de déplacement (86),
le dispositif d'actionnement (82, 112, 120) présentant plusieurs états de commutation,
dans un premier état de commutation, l'action de freinage du frein de stationnement dépendant de la déviation de l'élément d'actionnement (84, 114, 122) le long de la piste de déplacement (86) et dans un deuxième état de commutation, l'action de freinage totale du frein de stationnement pouvant être fournie,
l'élément d'actionnement (84, 114, 122) étant précontraint de telle sorte qu'il adopte une position neutre prédéfinie (N) sans action extérieure,
à côté de la position neutre (N) étant prévue une première région dite de déviation (10) limitée par une première position dite de déviation (12), dans laquelle le dispositif d'actionnement (82, 112, 120) peut adopter le premier état de commutation,
à côté de la première région de déviation (10), mais à distance de la position neutre (N), étant prévue une deuxième région dite de déviation (14) ou une deuxième position dite de déviation (16), dans laquelle le dispositif d'actionnement (82, 112, 120) adopte le deuxième état de commutation,
**caractérisé en ce que**
le dispositif d'actionnement (82, 112, 120) est réalisé de telle sorte que dans un premier mode et dans une position de l'élément d'actionnement (84, 114, 122) dans la première région de déviation (10), dans la position neutre (N) ou dans une troisième région dite de déviation (34) adjacente à la position neutre (N) mais espacée de la première région de déviation (10), et limitée par une troisième position dite de déviation (36), il présente le deuxième état de commutation, et **en ce que** dans un deuxième mode et dans une position de l'élément d'actionnement dans la première région de déviation (10), dans la position neutre (N) ou dans la troisième région de déviation (34), il présente le premier état de commutation,
le premier mode pouvant être commuté en le deuxième mode par le fait que l'élément d'actionnement (84, 114, 122) adopte une première position de commutation, et le deuxième mode pouvant être commuté en le premier mode par le fait que l'élément d'actionnement (84, 114, 122) adopte une deuxième position de commutation.

2. Dispositif d'actionnement selon la revendication 1, **caractérisé en ce que** la première position de commutation et/ou la deuxième position de commutation sont disposées à l'intérieur de la première région de déviation (10) ou en coïncidence avec la première position de déviation (12).

3. Dispositif d'actionnement selon la revendication 2, **caractérisé en ce que** la première position de commutation et la deuxième position de commutation sont disposées de manière coïncidente.

4. Dispositif d'actionnement selon la revendication 1, **caractérisé en ce que** la première position de commutation est disposée à l'intérieur de la première région de déviation (10) ou en coïncidence avec la première position de déviation (12) et la deuxième position de commutation est disposée à l'intérieur de la troisième région de déviation (34) ou en coïncidence avec la troisième position de déviation (36).

5. Dispositif d'actionnement selon l'une quelconque des revendications précédentes, **caractérisé en ce que** le dispositif d'actionnement (82, 112, 120) présente une position de contrôle de remorque (AHK) dans laquelle une fonction de contrôle de remorque peut être activée dans une position de l'élément d'actionnement (84, 114, 122) dans une quatrième région dite de déviation (42) ou une quatrième position dite de déviation (44) prévue à l'intérieur de la quatrième région de déviation (42), laquelle est disposée à proximité de la deuxième région de déviation (14) ou de la deuxième position de déviation (16), mais à distance de la première région de déviation (10), dans la position de contrôle de remorque (AHK), le dispositif d'actionnement (82, 112, 120) présentant le deuxième état de commutation pour un véhicule servant de véhicule tracteur, et un véhicule remorque accroché au véhicule tracteur pouvant être commuté dans un état non freiné.

6. Dispositif d'actionnement selon l'une quelconque des revendications 1 à 4, **caractérisé en ce que** le dispositif d'actionnement (82, 112, 120) présente une position de contrôle de remorque (AHK), dans laquelle une fonction de contrôle de remorque peut être activée dans une position de l'élément d'actionnement (84, 114, 122) dans une cinquième région dite de déviation (54) ou une cinquième position dite de déviation (56) prévue à l'intérieur de la cinquième région de déviation (54), laquelle est prévue à proximité de la position neutre (N), mais à distance de la première région de déviation (10), dans la position de contrôle de remorque (AHK), le dispositif d'actionnement (82, 112, 120) présentant le deuxième état de commutation pour un véhicule servant de véhicule tracteur et un véhicule remorque accroché au véhicule tracteur pouvant être commuté dans un état non freiné.

7. Dispositif d'actionnement selon l'une quelconque des revendications 1 à 4, **caractérisé en ce que** le dispositif d'actionnement (82, 112, 120) présente une fonction de frein de maintien en ligne qui, dans une position de l'élément d'actionnement (84, 114, 122), peut être actionnée dans une sixième région dite de déviation (64) limitée par une sixième position dite de déviation (66), laquelle est prévue à proximité de la position neutre (N) mais à distance de la première région de déviation (10), dans une position de l'élément d'actionnement (84, 114, 122) dans la sixième région de déviation (64), seuls les freins d'un véhicule remorque accroché à un véhicule servant de véhicule tracteur pouvant être actionnés, l'effet de freinage de ces freins dépendant de la déviation de l'élément d'actionnement (84, 114, 122) hors de la position neutre (N).

8. Dispositif d'actionnement selon l'une quelconque des revendications 1 à 6, **caractérisé en ce que** le dispositif d'actionnement (82, 112, 120) présente un autre élément d'actionnement de frein dit de maintien en ligne pouvant être actionné manuellement pour fournir une fonction de frein de maintien en ligne, lequel peut être dévié le long d'une piste de déplacement, l'élément d'actionnement de frein de maintien en ligne étant précontraint de telle sorte qu'il adopte une position neutre prédéfinie sans action extérieure, au moyen de l'élément d'actionnement de frein de maintien en ligne seuls les freins d'un véhicule remorque accroché à un véhicule servant de véhicule tracteur pouvant être actionnés, l'effet de freinage de ces freins dépendant de la déviation de l'élément d'actionnement (84, 114, 122) hors de la position neutre (N).

9. Dispositif d'actionnement selon l'une quelconque des revendications 1 à 6, **caractérisé en ce que** le dispositif d'actionnement (82, 112, 120) présente un commutateur pour commuter entre un mode de frein de stationnement et un mode de frein de maintien en ligne, lorsque le mode de frein de maintien en ligne est enclenché, l'élément d'actionnement (84, 114, 122) servant à fournir une fonction de freinage de maintien en ligne, au moyen de l'élément d'actionnement (84, 114, 122) seuls les freins d'un véhicule remorque accroché à un véhicule servant de véhicule tracteur pouvant être actionnés, l'effet de freinage de ces freins dépendant de la déviation de l'élément d'actionnement (84, 114, 122) hors de la position neutre (N).

10. Dispositif d'actionnement selon l'une quelconque des revendications précédentes, **caractérisé en ce que** l'effet de freinage du frein de stationnement dans le premier état de commutation dépend, de manière proportionnelle, dégressive ou progressive, de la déviation de l'élément d'actionnement (84, 114, 122).

11. Dispositif d'actionnement selon l'une quelconque des revendications 7 à 10, **caractérisé en ce que** l'effet de freinage pouvant être produit par la fonction de frein de maintien en ligne dépend, de manière proportionnelle, dégressive ou progressive, de la déviation de l'élément d'actionnement (84, 114, 122) ou de l'élément d'actionnement de frein de maintien en ligne.

12. Dispositif d'actionnement selon la revendication 10 ou 11, **caractérisé en ce que** l'effet de freinage respectif dépend en outre d'un état de charge.

13. Dispositif d'actionnement selon l'une quelconque des revendications précédentes, **caractérisé en ce qu'**une force d'actionnement requise pour la déviation de l'élément d'actionnement (84, 114, 122) et éventuellement de l'élément d'actionnement de frein de maintien en ligne augmente avec la déviation hors de la position neutre (N).

14. Elément d'actionnement selon la revendication 13, **caractérisé en ce que** la force d'actionnement nécessaire pour la déviation de l'élément d'actionnement (84, 114, 122) dans la première région de déviation (10) de la position neutre (N) à la première position de déviation (12) augmente de manière proportionnelle à la déviation et à une première constante de proportionnalité et dans la deuxième région de déviation (14) de manière proportionnelle à une autre déviation avec une deuxième constante de proportionnalité, la deuxième constante de proportionnalité étant supérieure à la première constante de proportionnalité.

15. Dispositif d'actionnement selon la revendication 14, **caractérisé en ce que** l'élément d'actionnement (84, 114, 122) est précontraint au moyen d'une force de ressort, dans la première région de déviation (10) un premier ressort (124) précontraignant l'élément d'actionnement (84, 114, 122) et dans la deuxième région de déviation (14) le premier ressort (124) et un deuxième ressort supplémentaire (128) précontraignant l'élément d'actionnement (84, 114, 122), et la première constante de proportionnalité étant une constante de ressort du premier ressort (124) et la deuxième constante de proportionnalité étant obtenue à partir de la première constante de ressort et d'une deuxième constante de ressort associée au deuxième ressort (128).

16. Dispositif d'actionnement selon l'une quelconque des revendications précédentes, **caractérisé en ce que** le dispositif d'actionnement (82, 112, 120) est réalisé de telle sorte que dans le cas d'un déplacement de l'élément d'actionnement (84, 114, 122) au-delà de la première position de déviation (12), de la première position de commutation située à l'intérieur de la première région de déviation (10) et/ou de la deuxième position de commutation située à l'intérieur de la première région de déviation (10), dans la direction de déplacement depuis la position neutre (N) ou vers la position neutre, ou dans les deux sens de déplacement, à chaque fois le long de la voie de déplacement, un signal en retour tactile, acoustique et/ou optique peut être produit pour un opérateur de l'élément d'actionnement (84, 114, 122).

17. Dispositif d'actionnement selon l'une quelconque des revendications précédentes, **caractérisé en ce que** le dispositif d'actionnement (82, 112, 120) est réalisé de telle sorte que dans le cas d'un déplacement de l'élément d'actionnement (84, 114, 122) au-delà de la troisième position de déviation (36) et/ou de la deuxième position de commutation située à l'intérieur de la troisième région de déviation (34) dans une direction de déplacement depuis la position neutre ou dans les deux sens de déplacement, à chaque fois le long de la voie de déplacement, un signal en retour tactile, acoustique et/ou optique peut être produit pour un opérateur de l'élément d'actionnement.

18. Dispositif d'actionnement selon l'une quelconque des revendications 5 à 16, **caractérisé en ce que** le dispositif d'actionnement (82, 112, 120) est réalisé de telle sorte que dans le cas d'un déplacement de l'élément d'actionnement (84, 114, 122) au-delà d'une région limite entre la deuxième région de déviation (14) et la quatrième région de déviation (42), en particulier dans les deux sens de déplacement, à chaque fois le long de la voie de déplacement, un signal en retour tactile, acoustique et/ou optique peut être produit pour l'opérateur.

19. Dispositif d'actionnement selon l'une quelconque des revendications 6 à 16, **caractérisé en ce que** le dispositif d'actionnement (82, 112, 120) est réalisé de telle sorte que dans le cas d'un déplacement de l'élément d'actionnement (84, 114, 122) au-delà de la cinquième position de déviation (56), en particulier dans les deux sens de déplacement, à chaque fois le long de la voie de déplacement, un signal en retour tactile, acoustique et/ou optique peut être produit pour l'opérateur.

20. Dispositif d'actionnement selon l'une quelconque des revendications 16 à 19, **caractérisé en ce que** le signal en retour tactile peut être produit au moyen d'une variation de la force d'actionnement nécessaire pour faire varier la déviation de l'élément d'actionnement (84, 114, 122).

21. Dispositif d'actionnement selon l'une quelconque des revendications 5 à 20, **caractérisé par** un mécanisme de verrouillage desserrable, qui empêche un déplacement de l'élément d'actionnement (84, 114, 122) de la position neutre (N) dans la quatrième région de déviation (42) ou dans la cinquième région de déviation (54), respectivement dans la quatrième position de déviation (44) ou la cinquième position de déviation (56), mais permet un déplacement de la quatrième (42) ou de la cinquième (54) région de déviation, respectivement de la quatrième (44) ou de la cinquième (56) position de déviation dans la direction de la position neutre (N).

22. Dispositif d'actionnement selon la revendication 21, **caractérisé en ce que** le mécanisme de verrouillage peut être desserré sous l'action d'une force supplémentaire sur l'élément d'actionnement (84, 114, 122), d'un mouvement latéral de l'élément d'actionnement (84, 114, 122), d'un déplacement dans une direction perpendiculaire à la direction de déplacement de l'élément d'actionnement (84, 114, 122), et/ou par un actionnement d'un élément de déverrouillage.

23. Dispositif d'actionnement selon l'une quelconque des revendications précédentes, **caractérisé par** un, deux ou plus de deux potentiomètres (110, 140) et/ou éléments de capteur de Hall (100, 136) en liaison mécanique avec l'élément d'actionnement (84, 114, 122), au moyen desquels un signal électrique peut être produit, dont l'amplitude dans le premier état de commutation et dans le deuxième mode dépend de la déviation de l'élément d'actionnement (84, 114, 122).

24. Dispositif d'actionnement selon l'une quelconque des revendications précédentes, **caractérisé par** un ou plusieurs éléments de commutation (102, 104) en liaison avec l'élément d'actionnement (84, 114, 122), disposés de manière à détecter séparément les états de commutation.

25. Dispositif d'actionnement selon l'une quelconque des revendications précédentes, **caractérisé en ce que** le dispositif d'actionnement (82, 112, 120) est réalisé de telle sorte que lors de l'atteinte d'une déviation maximale de l'élément d'actionnement (84, 114, 122), en particulier à l'atteinte d'une butée, un signal de commutation binaire puisse être produit.

26. Dispositif d'actionnement selon l'une quelconque des revendications précédentes, **caractérisé par** un élément de commutation pour détecter un déplacement de l'élément d'actionnement (84, 114, 122), dans lequel, en réponse à un déplacement de l'élément d'actionnement (84, 114, 122), des composants électriques du dispositif d'actionnement (82, 112, 120) peuvent être enclenchés au moyen de l'élément de commutation, ces composants électriques pouvant être déconnectés à la fin d'un intervalle de temps de repos.

27. Dispositif d'actionnement selon l'une quelconque des revendications précédentes, **caractérisé par** des moyen d'affichage optiques pour afficher le deuxième état de commutation.

28. Dispositif d'actionnement selon la revendication 27, **caractérisé en ce que** les moyens d'affichage optiques sont intégrés dans l'élément d'actionnement (84, 114, 122).

29. Dispositif d'actionnement selon l'une quelconque des revendications 5 à 28, **caractérisé en ce que** dans la position de contrôle de remorque, le véhicule remorque ne peut être commuté dans l'état non freiné après l'écoulement d'une période de temps prédéterminée.

30. Dispositif d'actionnement selon l'une quelconque des revendications précédentes, **caractérisé en ce que** l'élément d'actionnement (84, 114, 122) présente une transmission afin de produire une amplification mécanique de la déviation de l'élément d'actionnement (84, 114, 122).

31. Dispositif d'actionnement selon l'une quelconque des revendications précédentes, **caractérisé en ce que** l'élément d'actionnement est un levier pivotant (84), un commutateur rotatif dosable (112), une touche dosable (120), en particulier une touche basculante, un coulisseau déplaçable linéairement ou un bouton poussoir dosable déplaçable linéairement, un bouton à tirer déplaçable linéairement ou un bouton poussoir à traction déplaçable linéairement.

32. Dispositif de frein de stationnement, en particulier dispositif de frein de stationnement électrique ou pneumatique pour un véhicule, en particulier un véhicule utilitaire, comprenant un frein de service prévu pour le mode de conduite, et un frein de stationnement prévu pour immobiliser le véhicule, une action de freinage pouvant être produite au moyen du frein de stationnement indépendamment d'une action de freinage du frein de service, **caractérisé en ce que** le dispositif de frein de stationnement présente un dispositif d'actionnement (82, 112, 120) selon l'une quelconque des revendications 1 à 31.

33. Installation de freinage pour un véhicule, en particulier un véhicule utilitaire, comprenant un frein de service prévu pour le mode de conduite et un frein de stationnement prévu pour immobiliser le véhicule, **caractérisé par** un dispositif de frein de stationnement selon la revendication 32.
